# EUROPÄISCHE PATENTSCHRIFT

(11) **EP 3 695 206 B1**
(45) Veröffentlichungstag und Bekanntmachung des Hinweises auf die Patenterteilung: **04.09.2024**
(21) Anmeldenummer: 18785916.0
(22) Anmeldetag: 09.10.2018
(51) Int. Cl.: G01N 17/02, E04H 17/00, A01K 61/54

(54) **DRAHTGEFLECHT UND VERFAHREN ZUR HERSTELLUNG EINES DRAHTNETZES**
WIRE MESH AND METHOD TO MANUFACTURE A WIRE NET
TREILLIS ET PROCÉDÉ DE FABRICATION D'UN TREILLIS

(30) Priorität: 12.10.2017 DE 102017123817
(43) Veröffentlichungstag der Anmeldung: 19.08.2020
(73) Patentinhaber: Geobrugg AG, 8590 Romanshorn (CH)
(72) Erfinder: WENDELER-GÖGGELMANN, Corinna, 9100 Herisau (CH)
(74) Vertreter: Daub, Thomas
(86) Internationale Anmeldenummer: PCT/EP2018/077473
(87) Internationale Veröffentlichungsnummer: WO 2019/072846

(56) Entgegenhaltungen:
- EP-A2- 1 862 261
- CH-A2- 699 799
- CH-A2- 703 929
- CN-U- 205 712 139
- DE-A1- 102006 012 916
- WU TONG ET AL: "Single layer graphitic carbon nitride-modified graphene composite as a fiber coating for solid-phase microextraction of polycyclic aromatic hydrocarbons", MIKROCHIMICA ACTA, SPRINGER VERLAG, VIENNA, AT, vol. 184, no. 7, 5 April 2017 (2017-04-05), pages 2171 - 2180, XP036255083, ISSN: 0026-3672, [retrieved on 20170405], DOI: 10.1007/S00604-017-2233-0

## Beschreibung

### Stand der Technik

Die Erfindung betrifft ein Verfahren zur Herstellung eines Drahtnetzes nach dem Oberbegriff des Anspruchs 1 und ein Drahtgeflecht nach dem Anspruch 3.

Es ist bereits vorgeschlagen worden, dass ein Draht einer Drahtnetzvorrichtung eine Korrosionsschutzbeschichtung aufweist. Die Druckschrift DE 10 2006 012 916 A1 beschreibt ein mit einer Zink-Aluminium Beschichtung versehenes geschweißtes Drahtgitter für Gabionen. Die Druckschrift CN 205712139 U beschreibt einen Maschendrahtzaun aus einem nicht-hochfesten Draht, der mit einer Zink-Aluminiumbeschichtung versehen ist. Die Druckschrift EP 1862 261 A2 beschreibt einen Verbindungsclip für Drahtgeflechtbahnen, der mit einer Korrosionsschutzbeschichtung versehen ist. Die Druckschriften CH 703 929 A2, CH 699 799 A2 und WO 99/43894 A1 beschreiben jeweils Drahtgeflechte aus hochfesten Stahldrähten, die jeweils mit einer Klasse B Korrosionsschutzbeschichtung versehen sind. Die wissenschaftliche Veröffentlichung von Wu Tong et al. "Single layer graphitic carbon nitride-modified graphene composite as a fiber coating for solid-phase microextraction of polycyclic aromatic hydrocarbons" (DOI: 10.1007/S00604-017-2233-0) beschreibt eine Graphenbeschichtung für Edelstahldrähte. Die wissenschaftliche Veröffentlichung von Salgueiro Azevedo et al. "Corrosion mechanisms of Zn(Mg, AI) coated steel in accelerated tests and natural exposure: 1. The role of electrolyte composition in the nature of corrosion products and relative corrosion rate" (DOI: 10.1016/J.CORSCI.2014.05.014) beschreibt ein Korrosionstestverfahren für Stahldrähte.

Die Aufgabe der Erfindung besteht insbesondere darin, eine gattungsgemäße Vorrichtung mit hoher Beständigkeit bereitzustellen. Die Aufgabe wird erfindungsgemäß insbesondere durch die Merkmale der Patentansprüche 1 und 3 gelöst, während eine vorteilhafte Ausgestaltung und Weiterbildung der Erfindung dem Unteranspruch entnommen werden kann.

### Vorteile der Erfindung

Die Erfindung geht aus von einer Drahtnetzvorrichtung mit zumindest zwei ineinandergreifenden Netzelementen, von denen wenigstens ein Netzelement aus zumindest einem Einzeldraht, einem Drahtbündel, einer Drahtlitze, einem Drahtseil und/oder einem anderen Längselement mit zumindest einem, abgesehen von Beschichtungen vollständig aus einem hochfesten Stahl ausgebildetem Draht gefertigt ist, wobei der Draht zumindest eine Korrosionsschutzschicht aufweist.

Es wird erfindungsgemäß vorgeschlagen, dass zumindest ein Teilstück eines aus dem Draht bestehenden Drahtgeflechts mit der Korrosionsschutzschicht bei einem Testversuch mittels einer Klimawechselprüfung eine Korrosionsbeständigkeit von mehr als 1680 Stunden, vorzugsweise mehr als 2016 Stunden, vorteilhaft mehr als 2520 Stunden, bevorzugt mehr als 3024 Stunden und besonders bevorzugt mehr als 3528 Stunden aufweist. Dadurch kann vorteilhaft eine hohe Beständigkeit des Drahts, insbesondere der Drahtnetzvorrichtung und/oder eines Drahtnetzes, vorzugsweise Sicherheitsnetz, erreicht werden, insbesondere gegenüber korrosiven Umgebungsbedingungen, beispielsweise Witterungsbedingungen. Vorteilhaft kann dabei eine hohe Lebensdauer des Drahts, insbesondere der Drahtnetzvorrichtung und/oder des Drahtnetzes, erreicht werden, wodurch insbesondere Wartungs- und/oder Instandhaltungskosten reduziert werden können. Zudem kann vorteilhaft eine erhöhte Zuverlässigkeit und/oder Sicherheit der Drahtnetzvorrichtung und/oder des Drahtnetzes ermöglicht werden.

Die "Drahtnetzvorrichtung" umfasst erfindungsgemäß ein Drahtgeflecht. Unter einem "Netzelement" soll insbesondere ein, insbesondere vereinzelbares, Grundelement der Drahtnetzvorrichtung, insbesondere des Drahtnetzes, vorzugsweise des Sicherheitsnetzes, verstanden werden, welches mittels eines Ineinandergreifens mit benachbarten Grundelementen das Drahtnetz ausbildet. Das Netzelement ist insbesondere als filamentartiges Gebilde, insbesondere Drahtgebilde, beispielsweise aus zumindest einem Einzeldraht, zumindest einem Drahtbündel, zumindest einer Drahtlitze und/oder zumindest einem Drahtseil, ausgebildet. Das filamentartige Gebilde, insbesondere Drahtgebilde, kann insbesondere zwei offene Enden aufweisen oder in sich geschlossenen sein. Vorzugsweise liegt das filamentartige Gebilde, insbesondere Drahtgebilde, in einem unbelasteten Zustand zumindest im Wesentlichen in einer Ebene. Das Netzelement kann insbesondere eine unregelmäßige Form oder vorzugsweise eine regelmäßige Form aufweisen, welche zumindest teilweise eine Form eines Kreises, einer Raute und/oder eines gleichmäßigen und/oder unregelmäßigen Polygons darstellt. Insbesondere können verschiedene Netzelemente des Sicherheitsnetzes verschiedene Formen aufweisen, bevorzugt weisen die Netzelemente jedoch eine zumindest im Wesentlichen identische Form auf. Erfindungsgemäß ist das Netzelement als ein flachgedrückter Wendel ausgebildet.

Insbesondere bildet das Netzelement einen Wendel eines Maschennetzes zumindest teilweise aus. Vorzugsweise soll unter "zumindest im Wesentlichen identisch" abgesehen von Fertigungstoleranzen und/oder im Rahmen fertigungstechnischer Möglichkeiten identisch verstanden werden.

Unter einem "Draht" soll in diesem Zusammenhang insbesondere ein länglicher und/oder dünner und/oder zumindest maschinell biegbarer und/oder biegsamer Körper verstanden werden. Vorteilhaft weist der Draht, entlang seiner Längsrichtung einen zumindest im Wesentlichen konstanten, insbesondere kreisförmigen oder elliptischen Querschnitt auf. Besonders vorteilhaft ist der Draht, als ein Runddraht ausgebildet. Es ist aber auch denkbar, dass der Draht, zumindest abschnittsweise oder vollständig als ein Flachdraht, ein Vierkantdraht, ein polygonaler Draht und/oder ein Profildraht ausgebildet ist. Erfindungsgemäß ist der Draht vollständig aus Metall, insbesondere einer Metalllegierung, ausgebildet. Erfindungsgemäß ist der Draht als ein Stahldraht, insbesondere als ein Edelstahldraht, ausgebildet. Erfindungsgemäß ist der Draht, insbesondere das Drahtbündel, die Drahtlitze, das Drahtseil und/oder das andere Längselement mit dem zumindest einen Draht, abgesehen von einer Beschichtung vollständig aus hochfestem Stahl gefertigt. Erfindungsgemäß ist der Draht ein hochfester Stahldraht. Beispielsweise kann es sich bei dem hochfesten Stahl um Federstahl und/oder Drahtstahl und/oder einen für Drahtseile geeigneten Stahl handeln. Erfindungsgemäß weist der Draht eine Zugfestigkeit von wenigstens 800 N mm⁻², vorteilhaft von wenigstens 1000 N mm⁻², besonders vorteilhaft von wenigstens 1200 N mm⁻², vorzugsweise von wenigstens 1400 N mm⁻² und besonders bevorzugt von wenigstens 1600 N mm⁻², insbesondere eine Zugfestigkeit von etwa 1770 N mm⁻² oder von etwa 1960 N mm⁻² auf. Es ist auch denkbar, dass der Draht eine noch höhere Zugfestigkeit aufweist, beispielsweise eine Zugfestigkeit von wenigstens 2000 N mm⁻², oder von wenigstens 2200 N mm⁻², oder auch von wenigstens 2400 N mm-². Hierdurch kann eine hohe Belastbarkeit, insbesondere eine hohe Zugfestigkeit und/oder eine hohe Steifigkeit quer zum Drahtnetz erzielt werden. Außerdem können vorteilhafte Biegeeigenschaften erzielt werden. Insbesondere ist der Draht, vorzugsweise eine Mehrzahl an Drähten dazu vorgesehen, ein, insbesondere aus Netzelementen, vorzugsweise Wendeln, bestehendes, Drahtgeflecht zumindest teilweise auszubilden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Korrosionsschutz" soll insbesondere ein Schutz, insbesondere eine Schutzmaßnahme, zur Vermeidung von Schäden, die durch Korrosion an, insbesondere metallischen, Bauteilen hervorgerufen werden können verstanden werden. Der Korrosionsschutz kann insbesondere einen aktiven kathodischen Korrosionsschutz und/oder einen passiven Korrosionsschutz umfassen. Ein passiver Korrosionsschutz wird erfindungsgemäß mittels einer Korrosionsschutzschicht, vorzugsweise einer Korrosionsschutzbeschichtung, erreicht. Unter einem "Teilstück des Drahts" soll insbesondere ein Stück des die Drahtnetzvorrichtung, insbesondere das Drahtgeflecht, ausbildenden Drahts verstanden werden, welches vorzugsweise zumindest 1 cm, bevorzugt zumindest 3 cm oder besonders bevorzugt zumindest 5 cm lang ist. Unter einem "Teilstück eines aus dem Draht bestehenden Drahtgeflechts" soll erfindungsgemäß ein Drahtgeflecht mit zumindest zwei Biegestellen und bevorzugt mit zumindest fünf Biegestellen und mit zumindest zwei ineinandergeflochtenen Netzelementen, vorzugsweise Wendeln, bevorzugt mit zumindest fünf ineinandergeflochtenen Netzelementen, vorzugsweise Wendeln, verstanden werden. Unter einer "Biegestelle" soll erfindungsgemäß eine Stelle eines Drahts verstanden werden, an der sich eine Drahtausrichtung um zumindest 60° ändert innerhalb einer Länge des Drahts, welcher kleiner ist als fünf Drahtdurchmesser und bevorzugt kleiner ist als zehn Drahtdurchmesser.

Unter einer "Klimawechselprüfung" soll erfindungsgemäß eine Korrosionsbeständigkeitsprüfung der Korrosionsschutzschicht nach den Vorgaben der VDA (Verein der Automobilindustrie)-Empfehlung VDA 233-102 verstanden werden, welche insbesondere zumindest in einem Teilzeitraum eine Benebelung und/oder Besprühung zumindest eines Prüfstücks mit einem Salzsprühnebel vorsieht und/oder in zumindest in einem Teilzeitraum das Prüfstück einem Temperaturwechsel von Raumtemperatur zu Minustemperaturen aussetzt. Durch Variation einer Temperatur, einer relativen Feuchte und/oder einer Salzkonzentration, welcher das Prüfstück ausgesetzt ist kann vorteilhaft eine Verlässlichkeit eines Testverfahrens verbessert werden. Insbesondere können vorteilhaft Testbedingungen näher an reale Bedingungen, welchen die Drahtnetzvorrichtung insbesondere bei einem Feldeinsatz, ausgesetzt ist angepasst werden. Das Prüfstück ist erfindungsgemäß als ein Teilstück des Drahts der Drahtnetzvorrichtung ausgebildet. Die Durchführung der Klimawechselprüfung erfolgt erfindungsgemäß in Einklang mit den üblichen, einem Fachmann bekannten Randbedingungen für Klimawechselprüfungen, wie sie in der VDA-Empfehlung VDA 233-102 vom 30. Juni 2013 aufgeführt sind. Die Klimawechselprüfung erfolgt insbesondere in einer Prüfkammer. Die Bedingungen in einem Inneren der Prüfkammer bei der Klimawechselprüfung sind insbesondere streng kontrolliert. Insbesondere sind bei der Klimawechselprüfung strenge Vorgaben an Temperaturverläufe, relative Luftfeuchte und Benebelungszeiträume mit Salzsprühnebel zu befolgen. Ein Prüfzyklus der Klimawechselprüfung ist insbesondere in sieben Zyklusteile unterteilt. Ein Prüfzyklus der Klimawechselprüfung dauert insbesondere eine Woche. Ein Zyklusteil dauert insbesondere einen Tag. Ein Prüfzyklus umfasst drei unterschiedliche Unterprüfzyklen. Ein Unterprüfzyklus bildet ein Zyklusteil aus. Die drei Unterprüfzyklen umfassen zumindest einen Zyklus A, zumindest einen Zyklus B und/oder zumindest einen Zyklus C. Während eines Prüfzyklus laufen Unterprüfzyklen nacheinander folgender Reihenfolge ab: Zyklus B, Zyklus A, Zyklus C, Zyklus A, Zyklus B, Zyklus B, Zyklus A.

Zyklus A beinhaltet insbesondere eine Salzsprühphase. In der Salzsprühphase wird insbesondere innerhalb der Prüfkammer ein Salzsprühnebel versprüht. Insbesondere die während Zyklus A versprühte Salzlösung besteht hierbei insbesondere aus einer Lösung von Natriumchlorid in destilliertem, vorzugsweise vor einem Herstellen der Lösung gekochten, Wasser, welches vorzugsweise eine elektrische Leitfähigkeit von höchstens 20 µS/cm bei (25 ± 2) °C aufweist, mit einer Massenkonzentration in einem Bereich von (10 ± 1) g/I. Die Prüfkammer für die Klimawechselprüfung weist insbesondere ein Innenvolumen von zumindest 0,4 m³ auf. Insbesondere bei einem Betrieb der Prüfkammer ist das Innenvolumen homogen von Salzsprühnebel erfüllt. Die oberen Teile der Prüfkammer sind vorzugsweise derart ausgebildet, dass keine an der Oberfläche entstehenden Tropfen auf ein Prüfstück fallen können. Vorteilhaft beträgt eine Temperatur während des Versprühens des Salzsprühnebels, insbesondere innerhalb der Prüfkammer, (35 ± 0,5) °C, wobei die Temperatur vorzugsweise zumindest 100 mm entfernt von einer Wand der Prüfkammer gemessen wird.

Zyklus B beinhaltet insbesondere eine Arbeitsphase, während welcher die Temperatur bei Raumtemperatur (25 °C) und die relative Luftfeuchte bei einer raumtypischen relativen Luftfeuchte (70 %) gehalten ist. In der Arbeitsphase kann insbesondere die Prüfkammer geöffnet werden und das Prüfstück begutachtet und/oder kontrolliert werden.

Zyklus C beinhaltet insbesondere eine Gefrierphase. In der Gefrierphase wird insbesondere die Prüfkammertemperatur bei einem Wert unterhalb von 0 °C, vorzugsweise -15 °C, gehalten.

Unter einer "Korrosionsbeständigkeit" soll insbesondere eine Haltbarkeit eines Materials während einer Korrosionsprüfung, beispielsweise einer Klimawechselprüfung, insbesondere im Einklang mit der VDA Empfehlung VDA 233-102 vom 30. Juni 2013, einer Salzsprühnebelprüfung, insbesondere im Einklang mit der Norm DIN EN ISO 9227:2006, einer Schwefeldioxidprüfung, insbesondere im Einklang mit einer Norm DIN 50018:1997-6 und/oder einer Auslagerungsprüfung, während der eine Funktionstüchtigkeit eines Prüfstücks bestehen bleibt und/oder vorzugsweise eine zeitliche Dauer während der ein Schwellenwert eines Korrosionsparameters bei einem Prüfstück während einer Korrosionsprüfung, beispielsweise einer Klimawechselprüfung, einer Salzsprühnebelprüfung, einer Schwefeldioxidprüfung und/oder einer Auslagerungsprüfung, unterschritten ist, verstanden werden. Darunter, dass "eine Funktionstüchtigkeit bestehen bleibt" soll insbesondere verstanden werden, dass für eine Funktionsfähigkeit eines Drahtnetzes wichtige Materialeigenschaften eines Prüfstücks wie Reißfestigkeit und/oder Sprödheit im Wesentlichen unverändert bleiben. Darunter, dass "eine Materialeigenschaft im Wesentlichen unverändert bleibt" soll insbesondere verstanden werden, dass eine Änderung eines Materialparameters und/oder einer Materialeigenschaft weniger als 10 %, vorzugsweise weniger als 5 %, bevorzugt weniger als 3 % und besonders bevorzugt weniger als 1 % im Vergleich zu einem Ausgangswert vor der Korrosionsprüfung beträgt. Vorzugsweise ist der Korrosionsparameter als ein prozentualer Anteil einer Gesamtoberfläche eines Prüfstücks auf welchem rostbrauner Rost ("dark brown rust", DBR), insbesondere visuell, zu erkennen ist ausgebildet. Der Schwellenwert des Korrosionsparameters beträgt vorzugsweise 5 %. Bevorzugt gibt demnach eine Korrosionsbeständigkeit einen Zeitraum an, welcher verstreicht bis auf 5 % einer gesamten, insbesondere dem Salzsprühnebel in der Klimawechselprüfung und/oder der Salzsprühnebelprüfung ausgesetzten, Oberfläche eines Prüfstücks rostbrauner Rost ("dark brown rust", DBR) visuell erkennbar ist. Bevorzugt ist die Korrosionsbeständigkeit die Zeit die zwischen einem Start der Klimawechselprüfung, der Salzsprühnebelprüfung, der Schwefeldioxidprüfung und/oder der Auslagerungsprüfung und einem Auftreten von 5 % DBR auf der Oberfläche des Prüfstücks vergeht.

Erfindungsgemäß weist der Korrosionsschutz zumindest eine Korrosionsschutzschicht auf. Die Korrosionsschutzschicht kann eine flächenbezogene Masse, insbesondere zumindest auf der Oberfläche zumindest eines Teilstücks des Drahts, vorzugsweise des vollständigen Drahts, von wenigstens 215 g/m², vorzugsweise wenigstens 255 g/m², vorteilhaft wenigstens 275 g/m², bevorzugt wenigstens 300 g/m², und besonders bevorzugt von wenigstens 400 g/m², insbesondere bei einem Durchmesser des Drahts von höchstens 10 mm, vorzugsweise höchstens 6 mm, vorteilhaft höchstens 5 mm, bevorzugt höchstens 4 mm und besonders bevorzugt zumindest 2 mm aufweisen. Dadurch kann vorteilhaft eine hohe Beständigkeit der Drahtnetzvorrichtung erreicht werden. Insbesondere kann dadurch eine Lebensdauer eines Drahtnetzes erhöht werden. Vorteilhaft bildet eine dicke Korrosionsschutzschicht einen effektiven und langanhaltenden Schutz darunterliegender Materialien, beispielsweise hochfesten Stahls, gegen Korrosion aus. Insbesondere ist die Korrosionsschutzschicht als eine Zinkbeschichtung ausgebildet. Vorzugsweise ist die Korrosionsschutzschicht zumindest teilweise als eine aktive Korrosionsschutzschicht ausgebildet, welche insbesondere einen anodischen Korrosionsschutz ausbildet. Es ist zudem denkbar, dass die Korrosionsschutzschicht eine Mehrzahl, insbesondere übereinanderliegender Beschichtungen, insbesondere mit unterschiedlichen Materialeigenschaften zumindest einer Schicht, umfasst. Alternativ und/oder zusätzlich ist vorstellbar, dass die Korrosionsschutzschicht zumindest teilweise als eine passive Korrosionsschutzschicht und/oder eine kathodische Korrosionsschutzschicht ausgebildet ist. Erfindungsgemäß genügt die Korrosionsschutzschicht zumindest den in der DIN EN 10264-2:2012-3 Norm an eine Mindestmenge eines Überzugs mit einer Korrosionsschutzschicht für Klasse A Drähte gestellten Anforderungen.

Ferner wird vorgeschlagen, dass der Korrosionsschutz zumindest eine Korrosionsschutzschicht aufweist, welche als eine Zink-Aluminiumbeschichtung ausgebildet ist, insbesondere mit einem Aluminiumanteil von etwa 5 %. Dadurch kann vorteilhaft eine hohe Beständigkeit der Drahtnetzvorrichtung erreicht werden. Insbesondere kann dadurch eine Lebensdauer eines Drahtnetzes erhöht werden. Vorteilhaft bildet eine derartige Korrosionsschutzschicht einen effektiven und langanhaltenden Schutz darunterliegender Materialien, beispielsweise hochfesten Stahls, gegen Korrosion aus. Vorteilhaft bewirkt eine Zink-Aluminiumbeschichtung einen aktiven anodischen Korrosionsschutz. Zudem weist einer Zink-Aluminiumbeschichtung vorteilhaft eine glatte Oberfläche auf. Vorteilhaft haftet eine Zink-Aluminiumbeschichtung gut, insbesondere besser als eine reine Zinkbeschichtung, an einer Stahl-Oberfläche. Insbesondere weist die Zink-Aluminiumbeschichtung eine flächenbezogene Masse, insbesondere zumindest auf der Oberfläche zumindest eines Teilstücks des Drahts, vorzugsweise des vollständigen Drahts, von wenigstens 150 g/m², vorzugsweise wenigstens 215 g/m², vorteilhaft wenigstens 255 g/m², bevorzugt wenigstens 300 g/m² und besonders bevorzugt von wenigstens 350 g/m² auf. Insbesondere beträgt der Aluminiumanteil an der Korrosionsschutzschicht etwa 5 %, wodurch vorteilhaft eine eutektische Struktur der Zink-Aluminiumlegierung ermöglicht werden kann.

Des Weiteren wird vorgeschlagen, dass die Zink-Aluminiumbeschichtung zumindest ein von Aluminium und/oder von Zink verschiedenes Additiv, vorzugsweise Magnesium aufweist, welches insbesondere zumindest 0,5 % der Korrosionsschutzschicht umfasst. Dadurch kann vorteilhaft eine Beständigkeit der Drahtnetzvorrichtung weiter erhöht werden. Alternativ kann das Additiv ein von Magnesium verschiedenes Metall und/oder eine Mehrzahl verschiedener Metalle umfassen. Zudem ist vorstellbar, dass die Zink-Aluminiumbeschichtung zumindest ein von Aluminium, von Magnesium und/oder von Zink verschiedenes weiteres Additiv umfasst.

Zudem wird vorgeschlagen, dass zumindest ein Teilstück des Drahts bei zumindest einem Testversuch einen Korrosionsschutz, insbesondere eine Korrosionsschutzschicht, aufweist, welcher beschädigungsfrei, insbesondere bruchfrei, ein zumindest M-maliges Hin- und Herbiegen des Drahtes um zumindest einen Biegezylinder mit einem Durchmesser von höchstens 8d, vorzugsweise höchstens 6d, bevorzugt höchstens 4d und besonders bevorzugt höchstens 2d, jeweils um wenigstens 90° in entgegengesetzte Richtungen übersteht, wobei M, gegebenenfalls mittels Abrunden, als C·R^{-0,5}·d^{-0,5} bestimmbar ist und wobei d ein Durchmesser des Drahts in mm, R eine Zugfestigkeit des Drahts in N mm⁻² und C ein Faktor von wenigstens 750 N^{0,5} mm^{0,5}, vorzugsweise wenigstens 850 N^{0,5} mm^{0,5}, vorteilhaft wenigstens 1000 N^{0,5} mm^{0,5}, bevorzugt wenigstens 1300 N^{0,5} mm^{0,5} und besonders bevorzugt wenigstens 1500 N^{0,5} mm^{0,5} ist. Hierdurch können vorteilhafte Eigenschaften hinsichtlich einer Verarbeitbarkeit und/oder einer Fertigbarkeit erzielt werden. Ferner kann eine belastbares und/oder besonders korrosionsfeste Drahtnetzvorrichtung, insbesondere Drahtgeflecht, bereitgestellt werden. Außerdem kann eine hohe Beständigkeit erzielt werden. Weiterhin kann ein Aufbrechen, Ablösen und/oder Beschädigen eines Korrosionsschutzes, insbesondere einer Korrosionsschutzschicht bei einer Herstellung von Drahtnetzvorrichtungen, insbesondere Drahtgeflechten, vorteilhaft vermieden werden. Insbesondere kann vorteilhaft auf Testläufe bei einer Herstellung von Drahtnetzvorrichtungen, insbesondere Drahtgeflechten, zumindest weitgehend verzichtet werden. Ferner können für eine Drahtnetzvorrichtung, insbesondere für ein Drahtgeflecht, mit einer hohen Beständigkeit, insbesondere gegenüber Korrosion, vorzugsweise bei gleichzeitig hoher Belastbarkeit, geeignete Drähte einfach und/oder schnell und/oder zuverlässig identifiziert werden. Insbesondere kann ein gegenüber einem Hin- und Herbiegeversuch gemäß den Normen DIN EN 10218-1 :2012-03 und DIN°EN°10264-2:2012-03 deutlich strengeres und/oder belastungsspezifischeres Auswahlverfahren für einen geeigneten Draht bereitgestellt werden. Vorzugsweise wird der Draht bei dem Hin- und Herbiegen um zwei gegenüberliegende, identisch ausgebildete Biegezylinder gebogen. Vorteilhaft sind die Biegezylinder dazu vorgesehen, das Hin- und Herbiegen bei dem Hin- und Herbiegeversuch verformungsfrei und/oder beschädigungsfrei durchzuführen. Unter "beschädigungsfrei" soll insbesondere frei von Rissen, frei von Ablösungen, frei von Brüchen und/oder frei von vergleichbaren bei einem Verbiegen auftretenden Beschädigungen verstanden werden.

Ferner wird vorgeschlagen, dass zumindest ein Teilstück des Drahts bei zumindest einem, insbesondere weiteren, Testversuch einen Korrosionsschutz, insbesondere eine Korrosionsschutzschicht, aufweist, welcher beschädigungsfrei, insbesondere bruchfrei, ein N-maliges Verwinden des Drahtes übersteht, wobei N, gegebenenfalls mittels Abrunden, als B·R^{-0,5}·d^{-0,5} bestimmbar ist und wobei d ein Durchmesser des Drahts in mm, R eine Zugfestigkeit des Drahts in N mm⁻² und B ein Faktor von wenigstens 960 N^{0,5} mm^{0,5}, vorzugsweise wenigstens 1050 N^{0,5} mm^{0,5}, vorteilhaft wenigstens 1200 N^{0,5} mm^{0,5}, bevorzugt wenigstens 1500 N^{0,5} mm^{0,5} und besonders bevorzugt wenigstens 2000 N^{0,5} mm^{0,5} ist. Hierdurch kann vorteilhaft eine hohe Beständigkeit einer Drahtnetzvorrichtung, insbesondere eines Drahtgeflechts, insbesondere gegenüber Korrosion, erzielt werden. Weiterhin kann ein Aufbrechen, Ablösen und/oder Beschädigen eines Korrosionsschutzes, insbesondere einer Korrosionsschutzschicht bei einer Herstellung von Drahtnetzvorrichtungen, insbesondere Drahtgeflechten, vorteilhaft vermieden werden. Insbesondere kann vorteilhaft auf Testläufe bei einer Herstellung von Drahtnetzvorrichtungen, insbesondere Drahtgeflechten, zumindest weitgehend verzichtet werden. Ferner können für eine Drahtnetzvorrichtung, insbesondere für ein Drahtgeflecht, mit einer hohen Beständigkeit, insbesondere gegenüber Korrosion, vorzugsweise bei gleichzeitig hoher Belastbarkeit, geeignete Drähte einfach und/oder schnell und/oder zuverlässig identifiziert werden. Insbesondere kann ein gegenüber einem Verwindeversuch gemäß den Normen DIN EN 10218-1 :2012-03 und DIN°EN°10264-2:2012-03 deutlich strengeres und/oder belastungsspezifischeres Auswahlverfahren für einen geeigneten Draht bereitgestellt werden. Unter einem "Verwinden" soll insbesondere ein Verdrillen eines eingespannten Drahts um eine Längenachse verstanden werden.

Außerdem wird vorgeschlagen, dass zumindest ein Teilstück des Drahts bei zumindest einem, insbesondere zusätzlichem weiteren, Testversuch einen Korrosionsschutz, insbesondere eine Korrosionsschutzschicht, aufweist, welcher beschädigungsfrei, insbesondere bruchfrei, ein Wickeln des Drahtes um einen Wickeldorn, dessen Durchmesser zumindest im Wesentlichen einem Durchmesser des Drahts entspricht, übersteht. Hierdurch kann vorteilhaft eine hohe Beständigkeit einer Drahtnetzvorrichtung, insbesondere eines Drahtgeflechts, insbesondere gegenüber Korrosion, erzielt werden. Weiterhin kann ein Aufbrechen, Ablösen und/oder Beschädigen eines Korrosionsschutzes, insbesondere einer Korrosionsschutzschicht bei einer Herstellung von Drahtnetzvorrichtungen, insbesondere Drahtgeflechten, vorteilhaft vermieden werden. Insbesondere kann vorteilhaft auf Testläufe bei einer Herstellung von Drahtnetzvorrichtungen, insbesondere Drahtgeflechten, zumindest weitgehend verzichtet werden. Ferner können für eine Drahtnetzvorrichtung, insbesondere für ein Drahtgeflecht, mit einer hohen Beständigkeit, insbesondere gegenüber Korrosion, vorzugsweise bei gleichzeitig hoher Belastbarkeit, geeignete Drähte einfach und/oder schnell und/oder zuverlässig identifiziert werden. Insbesondere wird bei einem Wickeln des Drahts um den Wickeldorn der Draht zumindest im Wesentlichen spiralförmig um zumindest 360° um den Wickeldorn gebogen.

Zudem wird ein Drahtnetz insbesondere Sicherheitsnetz, vorzugsweise zu einer Sicherung gegen Steinschlag, mit einer Drahtnetzvorrichtung mit einer, insbesondere die Zahl zwei übersteigenden, Mehrzahl ineinandergreifender Netzelemente, welche zumindest teilweise wendelförmig ausgebildet sind, vorgeschlagen. Dadurch kann vorteilhaft ein Drahtnetz mit einer hohen Beständigkeit, insbesondere gegenüber Korrosion, insbesondere gegenüber korrosiven Umgebungsbedingungen, beispielsweise Witterungsbedingungen, erreicht werden. Vorteilhaft kann dabei eine hohe Lebensdauer des Drahtnetzes, erreicht werden, wodurch insbesondere Wartungs- und/oder Instandhaltungskosten reduziert werden können. Zudem kann vorteilhaft eine erhöhte Zuverlässigkeit und/oder Sicherheit des Drahtnetzes ermöglicht werden. Insbesondere ist das Drahtnetz als ein Drahtgeflecht mit einer Mehrzahl ineinandergeflochtener Wendel ausgebildet. Unterschiedliche Wendel kontaktieren sich insbesondere in Bereichen stärkster Biegungen der Wendel. Insbesondere ist das Drahtnetz als eine Böschungssicherung, als ein Sicherheitszaun, als ein Fangzaun, als ein Steinschlag-Schutznetz, als ein Absperrzaun, als ein Fischfarming-Netz, als ein Raubtier-Schutznetz, als ein Gehegezaun, als eine Tunnelsicherung, als ein Hangmurenschutz, als ein Motorsport-Schutzzaun, als ein Straßenzaun, als eine Lawinensicherung oder dergleichen ausgebildet. Insbesondere aufgrund seiner hohen Festigkeit und/oder Belastbarkeit sind auch Anwendungen als Abdeckung und/oder Umhüllung, beispielsweise von Kraftwerken, Fabrikgebäuden, Wohnhäuser oder anderen Gebäuden, als Explosionsschutz, als Geschossschutz, als Abschirmung gegen fliegende Objekte, als Fangnetz, als Rammschutz oder dergleichen denkbar. Das Drahtnetz kann beispielsweise horizontal oder vertikal oder schräg, insbesondere relativ zu einem Untergrund, ausgelegt und/oder angeordnet und/oder montiert sein. Insbesondere ist das Drahtnetz flächig ausgebildet. Vorteilhaft ist das Drahtnetz regelmäßig und/oder in zumindest eine Richtung periodisch aufgebaut. Bevorzugt ist das Drahtnetz einrollbar und/oder ausrollbar, insbesondere um eine Achse, welche parallel zu der Haupterstreckungsrichtung der Wendel verläuft. Insbesondere ist eine aus dem Drahtnetz aufgerollte Rolle in eine Richtung senkrecht zu der Haupterstreckungsrichtung der Wendel ausrollbar.

Ferner wird erfindungsgemäß ein Verfahren zur Herstellung eines Drahtnetzes, bei welchem das Drahtnetz aus Drahtnetzvorrichtungen hergestellt wird, vorgeschlagen. Dadurch kann vorteilhaft ein Drahtnetz mit einer hohen Beständigkeit, insbesondere gegenüber Korrosion, insbesondere gegenüber korrosiven Umgebungsbedingungen, beispielsweise Witterungsbedingungen, erreicht werden.

Zudem wird ein Verfahren zur Identifikation eines geeigneten Drahts, insbesondere aus hochfestem Stahl, für eine Drahtnetzvorrichtung, vorzugsweise für ein Drahtnetz vorgeschlagen, bei welchem eine Korrosionsbeständigkeit eines Prüfstücks des Drahts, insbesondere eines Prüfstücks eines aus dem Draht gebildeten Drahtgeflechts, mittels einer Klimawechselprüfung, einer Salzsprühnebelprüfung, einer Schwefeldioxidprüfung und/oder mittels einer Auslagerungsprüfung bestimmt wird. Dadurch kann vorteilhaft ein Draht, insbesondere eine Drahtnetzvorrichtung, vorzugsweise ein Drahtnetz mit einer hohen Beständigkeit, insbesondere gegenüber Korrosion, insbesondere gegenüber korrosiven Umgebungsbedingungen, beispielsweise Witterungsbedingungen, erreicht werden. Erfindungsgemäß kann eine Eignung eines Drahtes zur Herstellung eines Drahtnetzes vor einer Produktion des fertigen Drahtnetzes festgestellt werden. Dadurch können vorteilhaft Fehlproduktionen und/oder Ausschussproduktionen vermieden und damit insbesondere Kosten reduziert werden. Erfindungsgemäß wird ein Draht, welcher in der Klimawechselprüfung eine ausreichende Korrosionsbeständigkeit gezeigt hat, für einen Herstellungsprozess ausgewählt. Vorzugsweise wird ein Draht, welcher in der Klimawechselprüfung, der Salzsprühnebelprüfung, der Schwefeldioxidprüfung und/oder der Auslagerungsprüfung eine unausreichende, insbesondere einen Wert von 500 Stunden, vorzugsweise 600 Stunden, vorteilhaft 700 Stunden, bevorzugt 800 Stunden und besonders bevorzugt 1000 Stunden unterschreitende, Korrosionsbeständigkeit gezeigt hat vor einen Herstellungsprozess aussortiert.

Des Weiteren wird erfindungsgemäß vorgeschlagen, dass der Draht zur Bildung eines Netzelements mit einem, insbesondere maximalen, Biegeradius gebogen wird, welcher in jedem Arbeitsschritt größer als 5 mm, vorzugsweise größer als 6 mm, vorteilhaft größer als 7 mm, bevorzugt größer als 9 mm und besonders bevorzugt kleiner als 10 mm, ist. Dadurch kann vorteilhaft eine Beschädigung, insbesondere ein Aufbrechen und/oder Ablösen, des Korrosionsschutzes, insbesondere der Korrosionsschutzschicht, insbesondere während eines Herstellungsprozesses vermieden werden, wodurch vorteilhaft eine hohe Beständigkeit und/oder Lebensdauer einer derart produzierten Drahtnetzvorrichtung erreicht werden kann.

Weiterhin wird erfindungsgemäß vorgeschlagen, dass der Draht zur Bildung eines Netzelements mit einer, insbesondere maximal auftretenden, Biegegeschwindigkeit unterhalb 360 Grad/s, vorzugsweise unterhalb 270 Grad/s, vorteilhaft unterhalb 180 Grad/s, bevorzugt unterhalb 90 Grad/s und besonders bevorzugt oberhalb 45 Grad/s gebogen wird. Dadurch kann vorteilhaft eine Beschädigung, insbesondere ein Aufbrechen und/oder Ablösen, des Korrosionsschutzes, insbesondere der Korrosionsschutzschicht, insbesondere während eines Herstellungsprozesses vermieden werden, wodurch vorteilhaft eine hohe Beständigkeit und/oder Lebensdauer einer derart produzierten Drahtnetzvorrichtung erreicht werden kann.

Ferner wird erfindungsgemäß vorgeschlagen, dass bei einer Beschichtung eines Drahts eine, insbesondere maximale, Beschichtungstemperatur in jedem Arbeitsschritt unterhalb 440 °C, vorzugsweise unterhalb 435 °C, vorteilhaft unterhalb 430 °C, bevorzugt unterhalb 425 °C und besonders bevorzugt oberhalb 421 °C verbleibt. Dadurch kann vorteilhaft eine Beschädigung, insbesondere ein Aufbrechen und/oder Ablösen, des Korrosionsschutzes, insbesondere der Korrosionsschutzschicht, insbesondere während eines Herstellungsprozesses vermieden werden, wodurch vorteilhaft eine hohe Beständigkeit und/oder Lebensdauer einer derart produzierten Drahtnetzvorrichtung erreicht werden kann.

Des Weiteren wird vorgeschlagen, dass eine bei der Beschichtung des Drahts auf den Draht wirkende Wärme für eine Festigkeitserhöhung, insbesondere Zugfestigkeitserhöhung, des Drahts verwendet wird. Dadurch kann vorteilhaft eine Effizienz erhöht werden, insbesondere indem bei einem Prozess auftretende Wärme für einen weiteren Prozess verwendet werden kann. Zudem kann insbesondere eine zu große Sprödheit eines beschichteten Drahts vermieden werden, insbesondere indem ein zusätzliches Entweichen von Kohlenstoff aus einem Stahl, aus welchem der Draht insbesondere zumindest teilweise besteht, während des Beschichtungsprozesses zu einer Einstellung einer Festigkeit des Stahls vorteilhaft berücksichtigt wird.

### Zeichnungen

Weitere Vorteile ergeben sich aus der folgenden Zeichnungsbeschreibung. In den Zeichnungen ist sind sieben Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Ansicht eines Ausschnitts eines Drahtnetzes mit einer Drahtnetzvorrichtung,
- Fig. 2: eine Schnittansicht eines Drahts der Drahtnetzvorrichtung mit einem Korrosionsschutz und eine Schnittansicht eines weiteren Drahtes mit einem Korrosionsschutz,
- Fig. 3: eine schematische Ansicht einer Biegeeinheit,
- Fig. 4: eine schematische Ansicht einer Verwindeeinheit,
- Fig. 5: eine schematische Ansicht einer Wickeleinheit
- Fig. 6: eine perspektivische, schematische Ansicht einer Prüfkammer mit einer Testvorrichtung,
- Fig. 7: eine schematische, perspektivische Ansicht einer Halteeinheit der Testvorrichtung,
- Fig. 8: ein zeitliches Ablaufdiagramm einer Klimawechselprüfung in der Prüfkammer,
- Fig. 9: eine Temperaturkurve und eine relative Feuchtigkeitskurve während eines Teilzyklus der Klimawechselprüfung,
- Fig. 10: eine Temperaturkurve und eine relative Feuchtigkeitskurve während eines weiteren Teilzyklus der Klimawechselprüfung,
- Fig. 11: eine Temperaturkurve und eine relative Feuchtigkeitskurve während eines zusätzlichen weiteren Teilzyklus der Klimawechselprüfung,
- Fig. 12: ein Ablaufdiagramm eines Verfahrens,
- Fig. 13: ein Temperatur-Zeit-Diagramm,
- Fig. 14: ein Konzentrations-Zeit-Diagramm,
- Fig. 15: ein Konzentrations-Zeit-Diagramm,
- Fig. 16: eine Schnittansicht eines Drahts mit einem alternativen Korrosionsschutz,
- Fig. 17: eine Schnittansicht eines Drahts mit einem weiteren alternativen Korrosionsschutz,
- Fig. 18: eine Schnittansicht eines nicht erfindungsgemäßen Drahts mit einem nicht erfindungsgemäßen zweiten weiteren alternativen Korrosionsschutz,
- Fig. 19: eine Schnittansicht eines nicht erfindungsgemäßen Drahts mit einem nicht erfindungsgemäßen dritten weiteren alternativen Korrosionsschutz,
- Fig. 20: eine Schnittansicht eines nicht erfindungsgemäßen Drahts mit einem nicht erfindungsgemäßen vierten weiteren alternativen Korrosionsschutz und
- Fig. 21: eine schematische Ansicht eines Ausschnitts eines nicht erfindungsgemäßen weiteren Drahtnetzes mit einer nicht erfindungsgemäßen Drahtnetzvorrichtung

### Beschreibung der Ausführungsbeispiele

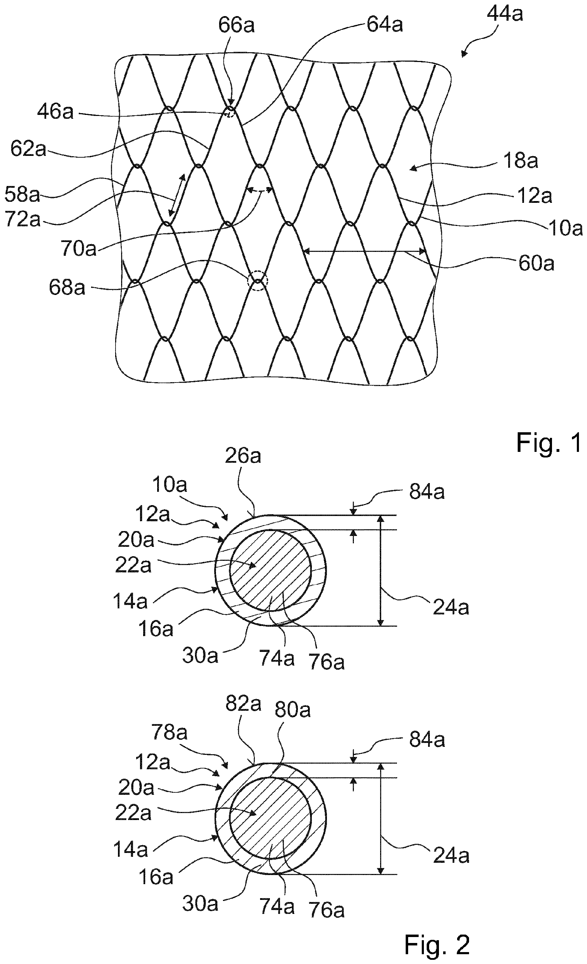

Fig. 1 zeigt eine schematische Ansicht eines Ausschnitts eines Drahtnetzes 44a mit einer Drahtnetzvorrichtung. Das Drahtnetz 44a ist als ein Sicherheitsnetz zu einer Sicherung gegen Steinschlag ausgebildet. Die Drahtnetzvorrichtung ist als eine Sicherheitsnetzvorrichtung ausgebildet. Die Drahtnetzvorrichtung weist eine Mehrzahl an Netzelementen 10a auf. Das Drahtnetz 44a weist eine die Zahl zwei übersteigende Mehrzahl ineinandergreifender Netzelemente 10a auf. Die Netzelemente 10a greifen jeweils ineinander ein. Die Netzelemente 10a sind ineinandergeflochten. Die Netzelemente 10a bilden ein Drahtgeflecht 18a. Die Netzelemente 10a sind wendelförmig ausgebildet. Die Netzelemente 10a sind als Wendel 58a ausgebildet. Das Netzelement 10a weist eine

Haupterstreckungsrichtung 60a auf. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Die Haupterstreckungsrichtungen 60a der Netzelemente 10a sind parallel zueinander ausgerichtet. Das Netzelement 10a weist eine Form einer flachgedrückten Helix auf. Das Netzelement 10a weist eine Abfolge von alternierenden Schenkeln 62a, 64a auf. Das Netzelement 10a weist Biegestellen 66a auf. Eine Biegestelle 66a verbindet zwei Schenkel 62a, 64a. Ineinandergreifende Netzelemente 10a berühren sich im aufgespannten Zustand in einem Nahbereich 68a der Biegestellen 66a, bevorzugt an den Biegestellen 66a. Die Schenkel 62a, 64a spannen einen Biegewinkel 70a auf. Die Schenkel 62a, 64a weisen einen Biegeradius 46a auf. Der Biegeradius 46a verschiedener Biegestellen 66a eines Netzelements 10a und/oder verschiedener Netzelemente 10a ist konstant. Das Netzelement 10a umfasst einen aus einem Draht 12a bestehenden Einzeldraht. Alternativ kann das Netzelement 10a ein Drahtbündel mit dem Draht 12a, eine Drahtlitze mit dem Draht 12a, ein Drahtseil mit dem Draht 12a und/oder ein anderes Längselement mit dem Draht 12a umfassen.

Fig. 2 zeigt einen senkrecht zu einer Erstreckungsrichtung 72a des Drahts 12a gebildeten Querschnitt 22a des Drahts 12a. Der Draht 12a weist einen Umfang 20a auf. Der Draht 12a weist einen Durchmesser 24a auf. Der Durchmesser 24a des Drahts 12a im in Fig. 2 gezeigten Ausführungsbeispiel beträgt 4 mm. Der Draht 12a weist eine Drahtoberfläche 26a auf. Der Draht 12a weist einen Drahtkern 76a auf. Der Draht 12a weist einen Korrosionsschutz 14a auf. Der Draht 12a weist eine Beschichtung 30a auf. Der Korrosionsschutz 14a ist als eine Beschichtung 30a ausgebildet. Die Beschichtung 30a ist als eine Korrosionsschutzschicht 16a ausgebildet. Der Draht 12a ist abgesehen von der Beschichtung 30a aus einem hochfesten Stahl 74a ausgebildet. Der Drahtkern 76a ist aus einem hochfesten Stahl 74a ausgebildet. Die Korrosionsschutzschicht 16a weist im in Fig. 2 gezeigten Ausführungsbeispiel eine flächenbezogene Masse von wenigstens 300 g/m² auf. Die Korrosionsschutzschicht 16a umschließt den Drahtkern 76a in Umfangsrichtung vollständig. Die Korrosionsschutzschicht 16a weist eine konstante Schichtdicke 84a auf. Die Korrosionsschutzschicht 16a ist als eine Zinkbeschichtung 80a ausgebildet. Die Korrosionsschutzschicht 16a ist stoffschlüssig mit dem Drahtkern 76a verbunden. Unter "stoffschlüssige verbunden" soll insbesondere verstanden werden, dass die Masseteile durch atomare oder molekulare Kräfte zusammengehalten werden, wie beispielsweise beim Löten, Schweißen, Kleben, Verzinken, Galvanisieren und/oder Vulkanisieren.

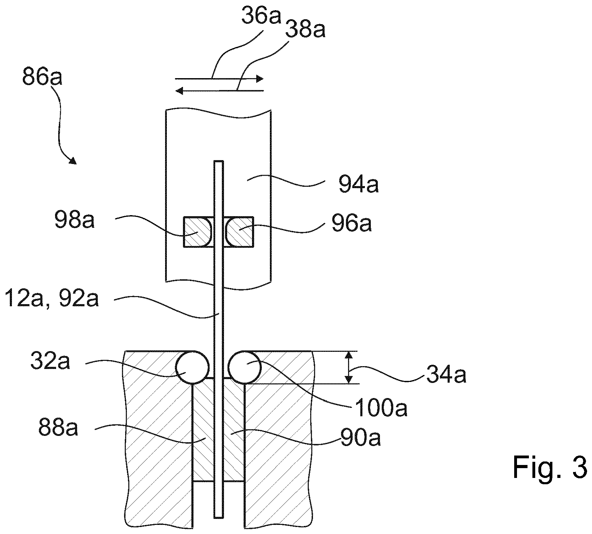

Fig. 3 zeigt eine schematische Darstellung einer Biegeeinheit 86a für eine Durchführung eines Hin- und Herbiegeversuchs eines Drahts 12a. Die Biegeeinheit 86a weist Spannbacken 88a, 90a auf, die zu einem Einspannen eines Prüfstücks 92a eines Drahts 12a vorgesehen sind. Das Prüfstück 92a ist vorzugsweise ein Teilstück des Drahts 12a und/oder des Drahtgeflechts 18a der Drahtnetzvorrichtung ausgebildet. Im gezeigten Fall handelt es sich um ein Prüfstück 92a des Drahts 12a. Die Biegeeinheit 86a weist einen Biegehebel 94a auf, welcher hin- und herschwenkbar gelagert ist. Der Biegehebel 94a weist Mitnehmer 96a, 98a für das Prüfstück 92a des Drahts 12a auf. Die Biegeeinheit 86a weist einen Biegezylinder 32a auf, um welchen das Prüfstück 92a des Drahts 12a bei dem Hin- und Herbiegeversuch gebogen wird. Die Biegeeinheit 86a weist einen weiteren Biegezylinder 100a auf, der zu dem Biegezylinder 32a identisch ausgebildet ist. Der weitere Biegezylinder 100a ist dem Biegezylinder 32a gegenüberliegend angeordnet. Bei dem Hin- und Herbiegeversuch biegt der Biegehebel 94a das Prüfstück 92a des Drahts 12a abwechselnd um jeweils wenigstens 90° um den Biegezylinder 32a und den weiteren Biegezylinder 100a. Der Hin- und Herbiegeversuch wird üblicherweise solange durchgeführt, bis die Beschichtung 30a, insbesondere die Korrosionsschutzschicht 16a des Prüfstück 92a des Drahts 12a beschädigt ist, insbesondere bricht, aufplatzt, reißt und/oder sich ablöst, um die Belastbarkeit und/oder Biegsamkeit der Beschichtung 30a, insbesondere der Korrosionsschutzschicht 16a, zu testen. Die Beschichtung 30a, insbesondere die Korrosionsschutzschicht 16a, des Drahts 12a übersteht ein zumindest M-maliges Hin- und Herbiegen des Drahtes 12a um wenigstens 90° in entgegengesetzte Richtungen 36a, 38a um die Biegezylinder 32a, 100a beschädigungsfrei. Die Biegezylinder 32a, 100a weisen einen Durchmesser 34a von höchstens 8 d auf, wobei d der Durchmesser 24a des Drahts 12a in Millimeter ist. Die Größe M ist, gegebenenfalls mittels Abrunden, als C·R^{-0,5}·d^{-0,5} bestimmbar. R umfasst eine Zugfestigkeit des Drahts 12a in N·mm⁻². Im gezeigten Ausführungsbeispiel beträgt die Zugfestigkeit des Drahts 12a 1570 N·mm⁻². C umfasst einen konstanten Faktor. Im gezeigten Ausführungsbeispiel beträgt C 750 N^{0,5}·mm^{0,5}.

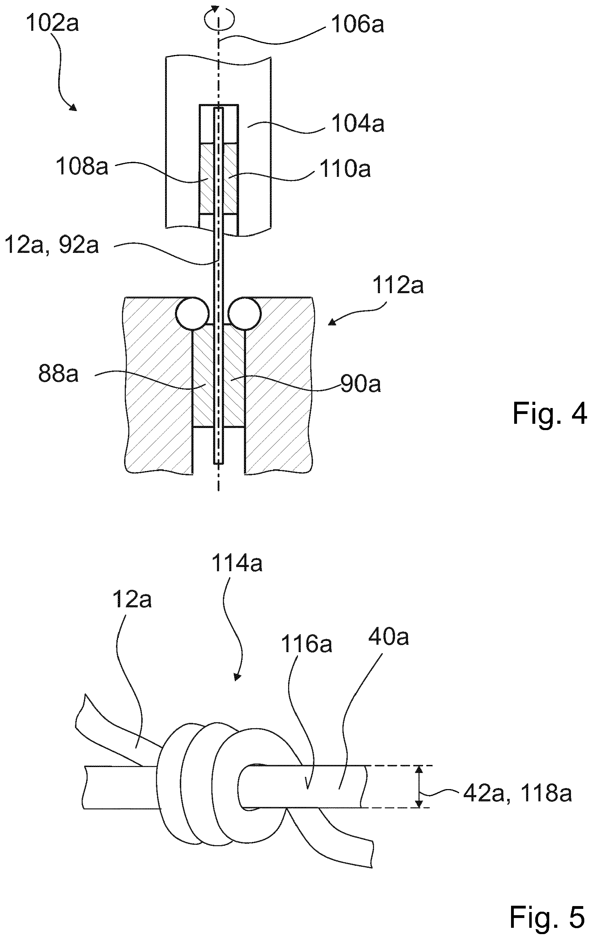

Fig. 4 zeigt eine schematische Darstellung einer Verwindeeinheit 102a für eine Durchführung eines Verwindeversuchs eines Drahts 12a. Die Verwindeeinheit 102a weist eine Grundeinheit 112a auf. Die Verwindeeinheit 102a weist einen Verwindehebel 104a, welcher um eine Achse 106a rotierbar gelagert ist. Die Verwindeeinheit 102a ist in die Biegeeinheit 86a überführbar und umgekehrt. Bei einem Umbauen der Biegeeinheit 86a und/oder der Verwindeeinheit 102a wird der Biegehebel 94a und der Verwindehebel 104a ausgetauscht. Die Verwindeeinheit 102a weist Spannbacken 88a, 90a auf, die zu einem Einspannen eines Prüfstücks 92a eines Drahts 12a in der Grundeinheit 112a vorgesehen sind. Das Prüfstück 92a ist vorzugsweise ein Teilstück des Drahts 12a und/oder des Drahtgeflechts 18a der Drahtnetzvorrichtung ausgebildet. Im gezeigten Fall handelt es sich um ein Prüfstück 92a des Drahts 12a. Der Verwindehebel 104a weist Spannbacken 108a, 110a auf, die zu einem Einspannen eines Prüfstücks 92a eines Drahts 12a in den Verwindehebel 104a vorgesehen sind. Der Verwindehebel 104a ist dazu vorgesehen, mittels einer Rotation des Verwindehebels 104a um die Achse 106a das Prüfstück 92a zu verdrillen. Bei einer Rotation des Verwindehebels 104a bleibt die Grundeinheit 112a rotationsfrei. Bei dem Verwindeversuch verdrillt der Verwindehebel 104a das Prüfstück 92a des Drahts 12a um ein Vielfaches von 360° um eine zu einer Längserstreckung des Prüfstücks 92a parallele Achse 106a. Der Verwindeversuch wird üblicherweise solange durchgeführt, bis die Beschichtung 30a, insbesondere die Korrosionsschutzschicht 16a des Prüfstück 92a des Drahts 12a beschädigt ist, insbesondere bricht, aufplatzt, reißt und/oder sich ablöst, um die Belastbarkeit und/oder Biegsamkeit der Beschichtung 30a zu testen. Die Beschichtung 30a, insbesondere die Korrosionsschutzschicht 16a, des Drahts 12a übersteht ein zumindest N-maliges Verwinden des Drahts 12a beschädigungsfrei. Die Größe N ist, gegebenenfalls mittels Abrunden, als B·R^{-0,5}·d^{-0,5} bestimmbar. B umfasst einen konstanten Faktor. Im gezeigten Ausführungsbeispiel beträgt B 960 N^{0,5} mm^{0,5}.

Fig. 5 zeigt eine schematische Darstellung einer Wickeleinheit 114a für eine Durchführung eines Wickelversuchs eines Drahts 12a. Die Wickeleinheit 114a weist einen Wickeldorn 40a auf. Der Wickeldorn 40a ist dazu vorgesehen, eine Wickelfläche 116a für ein Aufwickeln eines Drahts 12a bereitzustellen. Der Wickeldorn 40a weist einen Durchmesser 42a auf. Der Durchmesser 42a ist ein Außendurchmesser 118a des Wickeldorns 40a, welcher einem Durchmesser 24a des Drahts 12a zumindest im Wesentlichen entspricht. Es ist denkbar, dass der Wickeldorn 40a aus einem, insbesondere ungebogenen, Teilstück des Drahts 12a ausgebildet ist. Bei einem Wickelversuch wird der Draht 12a mindestens einmal um 360°, vorzugsweise spiralförmig, um den Wickeldorn 40a gewickelt. Der Korrosionsschutz 14a, insbesondere die Korrosionsschutzschicht 16a übersteht beschädigungsfrei ein Wickeln des Drahtes 12a um den Wickeldorn 40a.

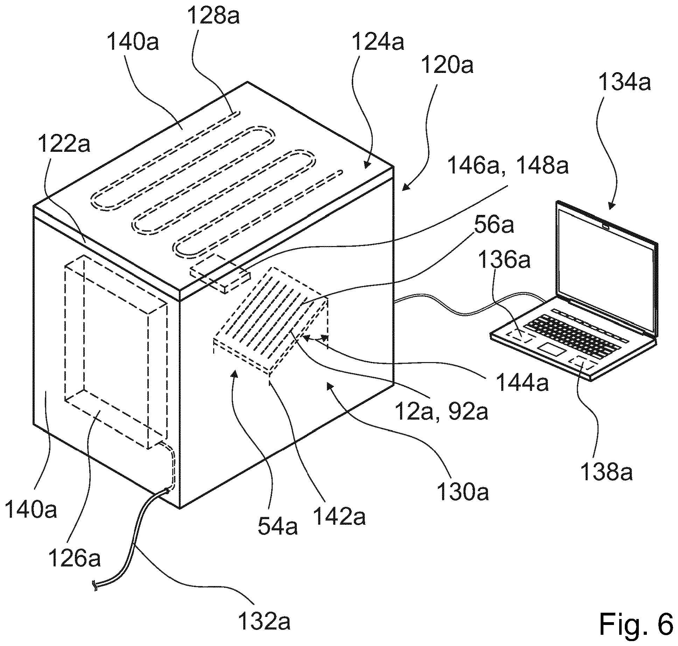

Fig. 6 zeigt eine Testvorrichtung zur Prüfung einer Korrosionsbeständigkeit zumindest eines Prüfstücks 92a des Drahts 12a und/oder eines Prüfstücks 92a des Drahtnetzes 44a. Die Testvorrichtung umfasst eine Prüfkammer 120a. Die Prüfkammer 120a ist als eine zu allen Seiten abgeschlossene Box ausgebildet. Die Prüfkammer 120a weist eine mit einer Klappe 122a verschließbare Öffnung 124a auf. Die Öffnung 124a ist dazu vorgesehen, Prüfstücke 92a in die Prüfkammer 120a hereinzubewegen und/oder aus der Prüfkammer 120a herauszubewegen. Die Prüfkammer 120a ist dazu vorgesehen, eine Prüfumgebung für eine Klimawechselprüfung, eine Salzsprühnebelprüfung und/oder eine Schwefeldioxidprüfung auszubilden und/oder eine Klimawechselprüfung, eine Salzsprühnebelprüfung und/oder eine Schwefeldioxidprüfung durchzuführen. Die Testvorrichtung weist eine Steuer- und/oder Regeleinheit 134a auf. Unter einer "Steuer- und/oder Regeleinheit 134a" soll insbesondere eine Einheit mit zumindest einer Steuerelektronik verstanden werden. Unter einer "Steuerelektronik" soll insbesondere eine Einheit mit einer Prozessoreinheit 136a und mit einer Speichereinheit 138a sowie mit einem in der Speichereinheit 138a gespeicherten Betriebsprogramm verstanden werden. Die Steuer- und/oder Regeleinheit 134a ist zumindest dazu vorgesehen, die Klimawechselprüfung, die Salzsprühnebelprüfung und/oder die Schwefeldioxidprüfung zu steuern. Die Testvorrichtung weist eine Verteilereinheit 126a auf. Die Verteilereinheit 126a ist in einem Inneren 130a der Prüfkammer 120a angeordnet. Die Verteilereinheit 126a ist dazu vorgesehen, einen Salzsprühnebel in der Prüfkammer 120a zu produzieren und/oder zu verteilen.

Alternativ ist die Verteilereinheit 126a dazu vorgesehen, eine Schwefeldioxidkonzentration für eine Schwefeldioxidprüfung in der Prüfkammer 120a zu erzeugen und/oder Schwefeldioxid in der Prüfkammer 120a zu verteilen. Alternativ oder zusätzlich ist die Verteilereinheit 126a dazu vorgesehen, eine relative Luftfeuchte in dem Inneren 130a der Prüfkammer 120a zu regeln, insbesondere zu erhöhen, zu verringern und/oder konstant zu halten. Die Verteilereinheit 126a weist eine Zu- und/oder Ableitung 132a auf. Mittels der Zu- und/oder Ableitung 132a kann eine Salzlösung zur Erzeugung des Salzsprühnebels und/oder eine Schwefeldioxidlösung und/oder ein Schwefeldioxidgas zu der Verteilereinheit 126a und/oder der Prüfkammer 120a hingeleitet und/oder von der Verteilereinheit 126a und/oder der Prüfkammer 120a weggeleitet werden. Die Verteilereinheit 126a ist mittels der Steuer- und/oder Regeleinheit 134a steuer- und/oder regelbar. Die Testvorrichtung weist eine Heiz- und/oder Kühleinheit 128a auf. Die Heiz- und/oder Kühleinheit 128a ist dazu vorgesehen, das Innere 130a der Prüfkammer 120a zu temperieren. Die Heiz- und/oder Kühleinheit 128a ist dazu vorgesehen, das Innere 130a der Prüfkammer 120a kontrolliert aufzuheizen und/oder zu kühlen. Die Heiz- und/oder Kühleinheit 128a ist zumindest teilweise in dem Inneren 130a der Prüfkammer 120a angeordnet. Die Heiz- und/oder Kühleinheit 128a ist zumindest teilweise innerhalb einer Wandung 140a der Prüfkammer 120a angeordnet. Die Heiz- und/oder Kühleinheit 128a ist mittels der Steuer- und/oder Regeleinheit 134a steuer- und/oder regelbar.

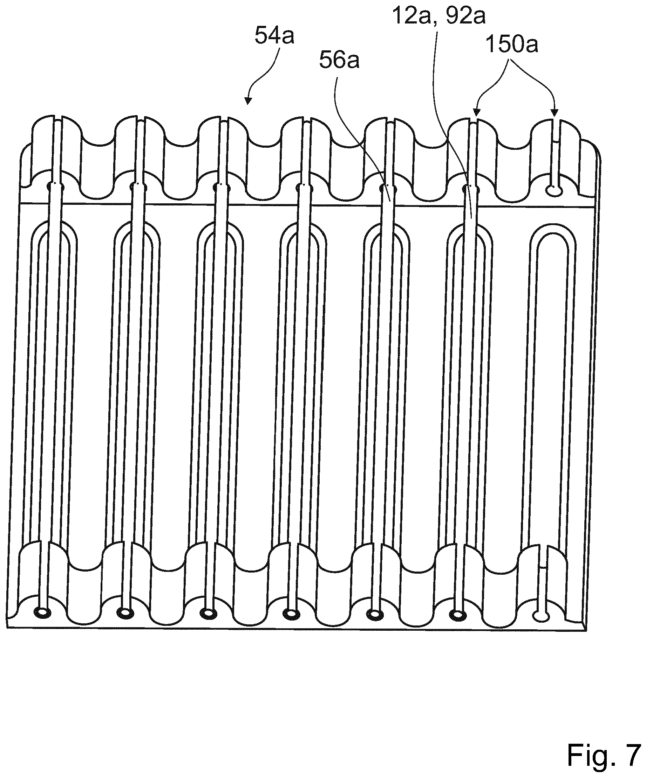

Die Testvorrichtung weist eine Halteeinheit 54a auf (vgl. Fig. 7). Die Halteeinheit 54a ist zu einer Halterung zumindest eines Prüfstücks 92a des Drahts 12a und/oder des aus dem Draht 12a gebildeten Drahtgeflechts 18a vorgesehen. Die Halteeinheit 54a ist zur Halterung eines Referenzdrahts 56a und/oder eines Referenzdrahtgeflechts ausgebildet. In der Halteeinheit 54a positionierte Prüfstücke 92a sind parallel zueinander ausrichtbar. In der Halteeinheit 54a positionierte Prüfstücke 92a sind so angeordnet, dass die Prüfstücke 92a zumindest im Wesentlichen gleiche Angriffsflächen für korrosive Umgebungsbedingungen in der Prüfkammer 120a bieten. Die Halteeinheit 54a ist aus einem korrosionsbeständigen Material, beispielsweise Plastik, ausgebildet. Die Halteeinheit 54a weist Aufnahmen 150a zur Aufnahme von Prüfstücken 92a und/oder Referenzdrähten 56a auf. Die Prüfstücke 92a und/oder Referenzdrähte 56a sind in die Aufnahmen 150a einclipsbar. Die Testvorrichtung weist eine Ständereinheit 142a auf. Die Ständereinheit 142a ist dazu vorgesehen, die Halteeinheit 54a in der Prüfkammer 120a zu positionieren, insbesondere in Einklang mit den Vorgaben der Norm DIN EN ISO 9227:2006. Die Ständereinheit 142a haltert die Halteeinheit 54a in einem Winkel 144a von 20° zur Vertikalen. Die Testvorrichtung weist eine Korrosionsmesseinheit 146a auf. Die Korrosionsmesseinheit 146a ist dazu vorgesehen, einen Fortschritt und/oder Status einer Korrosion zu messen. Die Korrosionsmesseinheit 146a ermittelt den Status und/oder Fortschritt der Korrosion mittels eines optischen Verfahrens, insbesondere mittels einer Kamera 148a der Korrosionsmesseinheit 146a.

Der Draht 12a, insbesondere das aus dem Draht 12a bestehende Drahtgeflecht 18a, mit dem Korrosionsschutz 14a, insbesondere der Korrosionsschutzschicht 16a weist bei einem Testversuch mittels einer Klimawechselprüfung eine Korrosionsbeständigkeit von mehr als 1680 Stunden auf. Der Draht 12a, insbesondere zumindest das aus dem Draht 12a bestehende Drahtgeflecht 18a, mit dem Korrosionsschutz 14a, insbesondere der Korrosionsschutzschicht 16a, weist zudem bei dem Testversuch mittels der Klimawechselprüfung eine Korrosionsbeständigkeit auf, die höher ist als eine Korrosionsbeständigkeit eines weiteren Drahts 78a.

Der weitere Draht 78a ist als ein Referenzdraht 56a ausgebildet. Der weitere Draht 78a weist einen zumindest im Wesentlichen identischen Umfangs 20a zu dem Draht 12a auf. Der weitere Draht 78a weist einen zumindest im Wesentlichen identischen Querschnitt 22a zu dem Draht 12a auf. Der weitere Draht 78a weist einen zumindest im Wesentlichen identischen Durchmesser 24a wie der Draht 12a auf. Der weitere Draht 78a weist eine Drahtoberfläche 82a auf. Der weitere Draht 78a weist eine Zinkbeschichtung 80a auf. Die Zinkbeschichtung 80a weist eine flächenbezogene Masse von wenigstens 115 g/m² auf. Die Zinkbeschichtung 80a weist eine flächenbezogene Masse von höchstens 215 g/m² auf. Der weitere Draht 78a entspricht zumindest den Anforderungen eines Klasse B Draht nach der Norm DIN EN 10264-2:2012-03. Aus dem weiteren Draht 78a ist ein zumindest im Wesentlichen identisch zu dem Drahtgeflecht 18a geformtes Drahtgeflecht herstellbar.

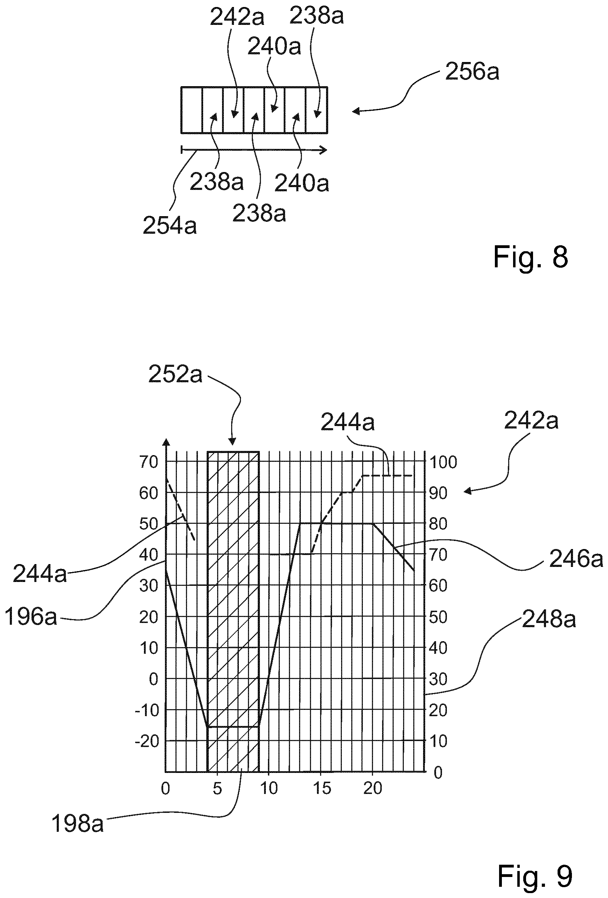

Fig. 8 zeigt ein zeitliches Ablaufdiagramm der Klimawechselprüfung. Die Klimawechselprüfung weist einen Prüfzyklus 256a auf. Der Prüfzyklus 256a ist in Teilzyklen unterteilt. Die Teilzyklen umfassen einen Zyklus A 238a, einen Zyklus B 240a und einen Zyklus C 242a. Die zeitliche Abfolge der Teilzyklen in dem Prüfzyklus 256a ist in Fig. 8 mittels einer Zeitachse 254a illustriert. Die Dauer eines Teilzyklus beträgt einen Tag. Die Dauer des Prüfzyklus 256a beträgt eine Woche.

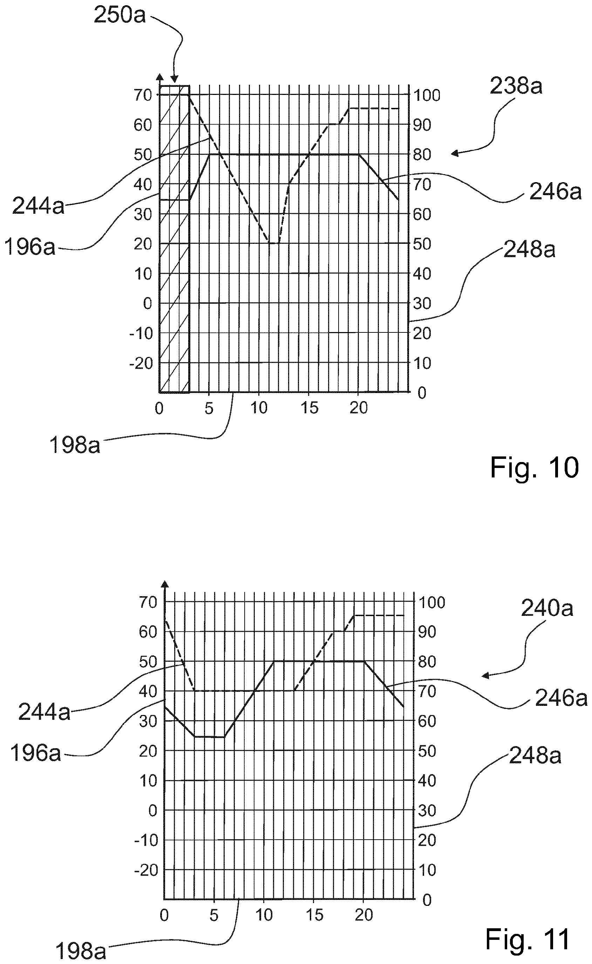

Figuren 9, 10 und 11 zeigen Temperaturkurven 246a der Prüfkammertemperatur 48a und relative Feuchtigkeitskurven 244a der relativen Luftfeuchtigkeit in der Prüfkammer 120a während dem Zyklus A 238a (Fig. 9), dem Zyklus B 240a (Fig. 10) und dem Zyklus C 242a (Fig. 11). Auf Ordinaten 196a auf den linken Seiten der Diagramme ist die Prüfkammertemperatur 48a aufgetragen. Auf weiteren Ordinaten 248a auf den rechten Seiten der Diagramme ist die relative Luftfeuchtigkeit aufgetragen. Auf Abszissen 198a ist eine Zeit in Stunden aufgetragen.

Der Zyklus A 238a (vgl. Fig. 9) beginnt mit einer 3-stündigen Salzsprühphase 250a. Während der Salzsprühphase 250a ist die Prüfkammer 120a mittels der Verteilereinheit 126a mit einem Salzsprühnebel gefüllt. Während der Salzsprühphase 250a beträgt die Prüfkammertemperatur 48a 35 °C. Im Anschluss an die Salzsprühphase 250a erhöht sich die Prüfkammertemperatur 48a innerhalb von zwei Stunden von 35 °C auf 50 °C und wird bei diesem Wert für weitere 15 Stunden gehalten. Danach sinkt die Prüfkammertemperatur 48a innerhalb von vier Stunden auf 35 °C ab. Die relative Luftfeuchte verringert sich nach der Salzsprühphase 250a von 100 % auf 50 % innerhalb von sechs Stunden und steigt danach schrittweise während acht Stunden auf 95 % an. Bei dem Wert von 95 % verbleibt die relative Luftfeuchte bis zu einem Ende des Zyklus A 238a nach weiteren fünf Stunden.

Der Zyklus B 240a (vgl. Fig. 10) beginnt mit einem 3-stündigen Abfall der Prüfkammertemperatur 48a von 35 °C auf 25 °C und wird bei diesem Wert für weitere 3 Stunden gehalten. Danach steigt die Prüfkammertemperatur 48a innerhalb von fünf Stunden auf 50 °C an. Nach weiteren neun Stunden bei diesem Wert sinkt die Prüfkammertemperatur 48a zum Ende des Zyklus B 240a innerhalb von vier Stunden auf 35 °C ab. Die relative Luftfeuchte fällt zu Beginn innerhalb von drei Stunden von 95 % auf 70 % und verbleibt bei diesem Wert für zehn Stunden. Danach steigt die relative Luftfeuchte schrittweise während sechs Stunden auf 95 % an. Bei dem Wert von 95 % verbleibt die relative Luftfeuchte bis zu einem Ende des Zyklus B 240a nach weiteren fünf Stunden.

Der Zyklus C 242a (vgl. Fig. 11) beginnt mit einem 4-stündigen Abfall der Prüfkammertemperatur 48a von 35 °C auf -15 °C und wird bei diesem Wert für weitere fünf Stunden gehalten. Während dieser fünf Stunden befindet sich die Prüfkammertemperatur 48a unter dem Gefrierpunkt. Die Prüfkammer 120a befindet sich in einer Gefrierphase 252a. Im Anschluss an die Gefrierphase 252a steigt die Prüfkammertemperatur 48a innerhalb von fünf Stunden auf 50 °C an. Nach weiteren sechs Stunden bei diesem Wert sinkt die Prüfkammertemperatur 48a zum Ende des Zyklus C 242a innerhalb von vier Stunden auf 35 °C ab. Die relative Luftfeuchte fällt zu Beginn von 95 % ausgehend ab. In der Gefrierphase 252a ist die relative Luftfeuchte sehr niedrig. Nach Ende der Gefrierphase 252a und nach einem Anstieg der Prüfkammertemperatur 48a über den Gefrierpunkt verweilt die relative Luftfeuchte für drei Stunden bei 70 %. Danach steigt die relative Luftfeuchte schrittweise während fünf Stunden auf 95 % an. Bei dem Wert von 95 % verbleibt die relative Luftfeuchte bis zu einem Ende des Zyklus C 242a nach weiteren fünf Stunden.

Der Draht 12a, insbesondere das aus dem Draht 12a bestehende Drahtgeflecht 18a, mit dem Korrosionsschutz 14a, insbesondere der Korrosionsschutzschicht 16a weist bei einem Testversuch mittels einer Salzsprühnebelprüfung eine Korrosionsbeständigkeit von mehr als 500 Stunden auf. Der Draht 12a, insbesondere zumindest das aus dem Draht 12a bestehende Drahtgeflecht 18a, mit dem Korrosionsschutz 14a, insbesondere der Korrosionsschutzschicht 16a, weist zudem bei dem Testversuch mittels der Salzsprühnebelprüfung eine Korrosionsbeständigkeit auf, die höher ist als eine Korrosionsbeständigkeit eines weiteren Drahts 78a.

Der Draht 12a mit dem Korrosionsschutz 14a, insbesondere das aus dem Draht 12 bestehende Drahtgeflecht 18a, mit dem Korrosionsschutz 14a, insbesondere der Korrosionsschutzschicht 16a, weist zudem bei einem zusätzlichen Testversuch mittels einer Schwefeldioxidprüfung eine Korrosionsbeständigkeit von mehr als 500 Stunden auf. Der Draht 12a, insbesondere ein aus dem Draht 12a bestehendes Drahtgeflecht 18a, mit dem Korrosionsschutz 14a, insbesondere der Korrosionsschutzschicht 16a, weist bei dem zusätzlichen Testversuch mittels der Schwefeldioxidprüfung eine Korrosionsbeständigkeit auf, die höher ist als eine Korrosionsbeständigkeit des weiteren Drahts 78a.

Der Draht 12a, insbesondere ein aus dem Draht 12a bestehendes Drahtgeflecht 18a, mit dem Korrosionsschutz 14a, insbesondere der Korrosionsschutzschicht 16a, weist bei einer Auslagerungsprüfung innerhalb eines definierten Zeitraums eine wesentlich geringere Korrosion auf als der gleichzeitig derselben Auslagerungsprüfung unterzogene weitere Draht 78a. Die Korrosion, insbesondere die Stärke der Korrosion, eines Drahts 12a, 78a ist anhand einer Anzahl und/oder einer Gesamtfläche korrodierter Stellen auf einer Drahtoberfläche 26a, 82a eines Drahts 12a, 78a abschätzbar. Bei der Auslagerungsprüfung werden Prüfstücke 92a von Drähten 12a und/oder Drahtgeflechten 18a in zumindest einer, vorzugsweise zumindest zwei voneinander verschiedenen Lagerpositionen, insbesondere einer vertikalen Lagerposition und/oder einer horizontalen Lagerposition und/oder einer schrägen Lagerposition, positioniert, insbesondere ausgelagert.

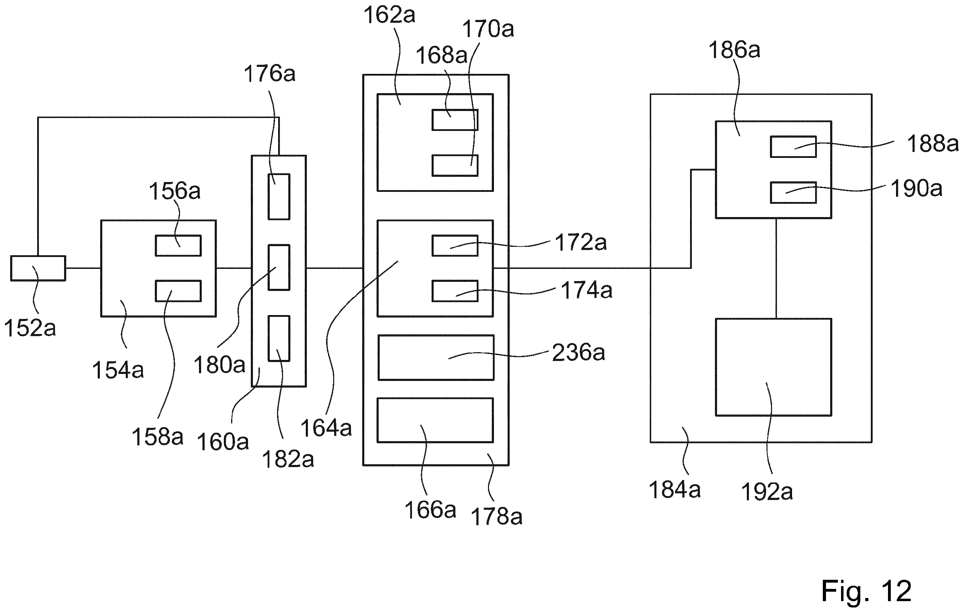

Fig. 12 zeigt ein Ablaufdiagramm für Verfahren zur Herstellung einer Drahtnetzvorrichtung und/oder eines Drahtnetzes 44a, zur Identifikation eines geeigneten Drahts 12a und/oder für ein Testverfahren zur Prüfung einer Korrosionsbeständigkeit. In zumindest einem Verfahrensschritt 152a wird der Draht 12a aus dem hochfesten Stahl 74a hergestellt. In zumindest einem Verfahrensschritt 154a wird der Draht 12a mit der Beschichtung 30a beschichtet. In zumindest einem Verfahrensschritt 156a wird der Draht 12a bei dem Beschichtungsvorgang mit einer Beschichtungstemperatur, die in jedem Arbeitsschritt unterhalb 430 °C verbleibt, beschichtet. In zumindest einem Verfahrensschritt 158a wird eine bei der Beschichtung des Drahts 12a auf den Draht 12a wirkende Wärme für eine Erzeugung einer Zugfestigkeitserhöhung des Drahts 12a verwendet.

In zumindest einem Verfahrensschritt 160a wird ein mit einem Korrosionsschutz 14a und/oder einer Korrosionsschutzschicht 16a versehener Draht 12a für eine Prüfung der Korrosionsbeständigkeit ausgewählt. In zumindest einem Verfahrensschritt 176a wird eine Auswahl des Drahts 12a für die Prüfung der Korrosionsbeständigkeit von einer Prüfung der Korrosionsschutzschicht 16a mittels eines Wickelversuchs abhängig gemacht. Drähte 12a mit Korrosionsschutzschichten 16a, welche bei dem Wickelversuch versagen werden aussortiert. In zumindest einem Verfahrensschritt 180a wird eine Auswahl des Drahts 12a für die Prüfung der Korrosionsbeständigkeit von einer Prüfung der Korrosionsschutzschicht 16a mittels eines Verwindeversuchs abhängig gemacht. Drähte 12a mit Korrosionsschutzschichten 16a, welche bei dem Verwindeversuch versagen werden aussortiert. In zumindest einem Verfahrensschritt 182a wird eine Auswahl des Drahts 12a für die Prüfung der Korrosionsbeständigkeit von einer Prüfung der Korrosionsschutzschicht 16a mittels eines Hin- und Herbiegeversuchs abhängig gemacht. Drähte 12a mit Korrosionsschutzschichten 16a, welche bei dem Hin- und Herbiegeversuch versagen werden aussortiert.

In zumindest einem Verfahrensschritt 178a wird ein geeigneter Draht 12a für die Drahtnetzvorrichtung und/oder für das Drahtnetz 44a mit hoher Korrosionsbeständigkeit bestimmt. Dabei wird die Korrosionsbeständigkeit eines Prüfstücks 92a des Drahts 12a und/oder des Drahtgeflechts 18a, in zumindest einem Verfahrensschritt 236a mittels der Klimawechselprüfung, in zumindest einem Verfahrensschritt 164a mittels der Salzsprühnebelprüfung, in zumindest einem Verfahrensschritt 162a mittels der Schwefeldioxidprüfung und/oder in zumindest einem Verfahrensschritt 166a mittels der Auslagerungsprüfung bestimmt.

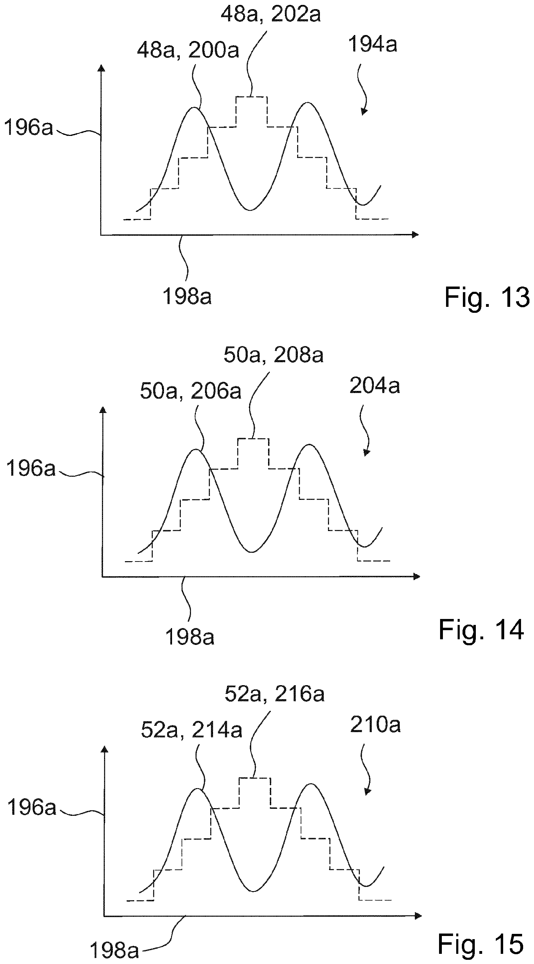

In zumindest einem Verfahrensschritt 172a wird während der Salzsprühnebelprüfung eine Prüfkammertemperatur 48a variiert (vgl. Fig. 13). In dem in Fig. 13 gezeigten Temperatur-Zeit-Diagramm 194a sind zwei Temperaturverläufe 200a, 202a gezeigt. Die Temperatur ist hierbei auf der Ordinate 196a und die Zeit auf der Abszisse 198a aufgetragen. Ein Temperaturverlauf 200a zeigt einen sinusförmigen Verlauf. Ein weiterer Temperaturverlauf 202a zeigt einen stufenpyramidenförmigen Verlauf. In zumindest einem Verfahrensschritt 174a wird während der Salzsprühnebelprüfung eine Salzkonzentration 50a variiert (vgl. Fig. 14). In dem in Fig. 14 gezeigten Konzentration-Zeit-Diagramm 204a sind zwei Konzentrationsverläufe 206a, 208a gezeigt. Die Konzentration ist hierbei auf der Ordinate 196a und die Zeit auf der Abszisse 198a aufgetragen. Ein Konzentrationsverlauf 206a zeigt einen sinusförmigen Verlauf. Ein weiterer Konzentrationsverlauf 208a zeigt einen stufenpyramidenförmigen Verlauf.

In zumindest einem Verfahrensschritt 168a wird während der Schwefeldioxidprüfung eine Prüfkammertemperatur 48a variiert (vgl. Fig. 13). In zumindest einem Verfahrensschritt 170a wird während der Schwefeldioxidprüfung eine Schwefeldioxidkonzentration 52a variiert (vgl. Fig. 15). In dem in Fig. 15 gezeigten Konzentration-Zeit-Diagramm 210a sind zwei Konzentrationsverläufe 214a, 216a gezeigt. Die Konzentration ist hierbei auf der Ordinate 196a und die Zeit auf der Abszisse 198a aufgetragen. Ein Konzentrationsverlauf 214a zeigt einen sinusförmigen Verlauf. Ein weiterer Konzentrationsverlauf 216a zeigt einen stufenpyramidenförmigen Verlauf.

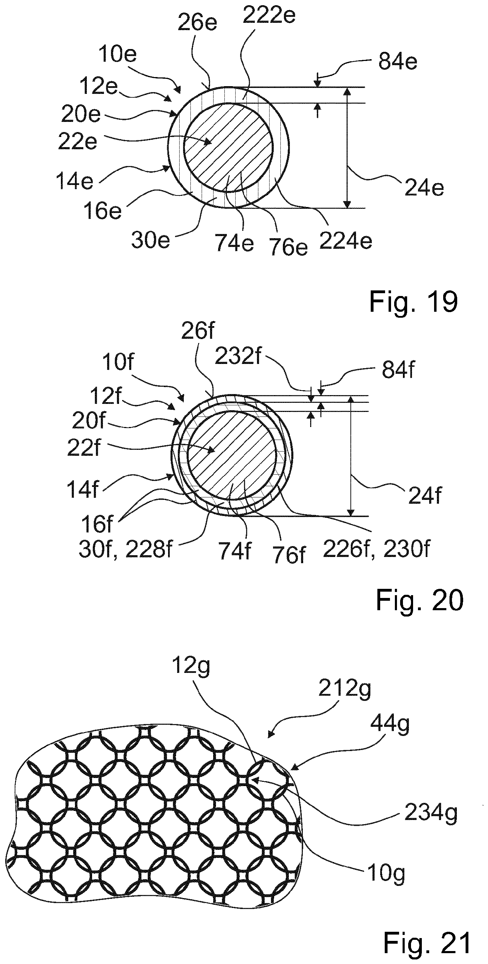

In zumindest einem Verfahrensschritt 184a wird ein Drahtnetz 44a aus Drahtnetzvorrichtungen hergestellt. In zumindest einem Verfahrensschritt 186a wird ein Draht 12a aus einem hochfesten Stahl 74a zu Wendeln 58a und/oder zu ringförmig in sich geschlossenen Netzelementen 10a (vgl. Fig. 21) gebogen. In zumindest einem Verfahrensschritt 188a wird der Draht 12a zur Bildung eines Netzelements 10a mit einem Biegeradius 46a gebogen, welcher in jedem Arbeitsschritt größer als 5 mm ist. In zumindest einem Verfahrensschritt 190a wird der Draht 12a zur Bildung eines Netzelements 10a mit einer Biegegeschwindigkeit unterhalb 360 Grad/s gebogen. In zumindest einem Verfahrensschritt 192a wird aus den Wendeln 58a und/oder den in sich geschlossenen Netzelementen 10a zumindest ein Drahtnetz 44a geflochten.

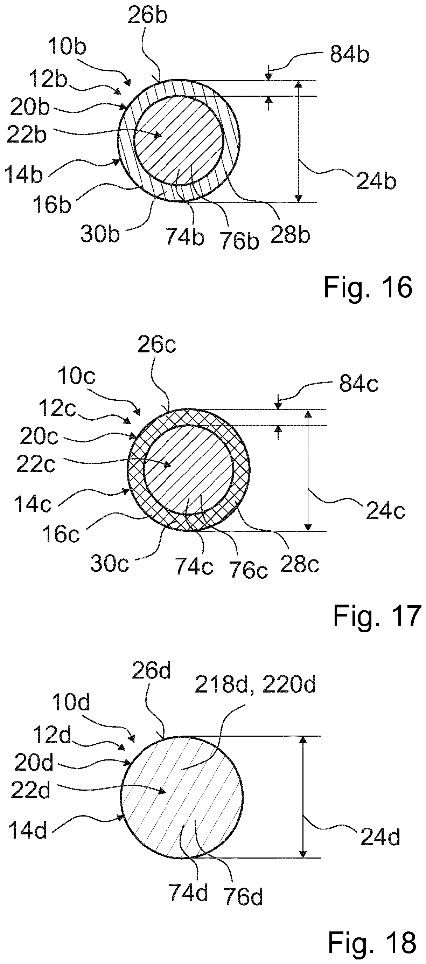

In den Figuren 16 und 17 sind zwei weitere Ausführungsbeispiele der Erfindung gezeigt. In den Figuren 18 bis 21 sind vier weitere nicht erfindungsgemäße Ausführungen gezeigt. Die nachfolgenden Beschreibungen und die Zeichnungen beschränken sich im Wesentlichen auf die Unterschiede zwischen den erfindungsgemäßen Ausführungsbeispielen und den nicht erfindungsgemäßen Ausführungen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen erfindungsgemäßen Ausführungsbeispiele und der nicht erfindungsgemäßen Ausführungen, insbesondere der Figuren 1 bis 15, verwiesen werden kann. Zur Unterscheidung der erfindungsgemäßen Ausführungsbeispiele und der nicht erfindungsgemäßen Ausführungen ist der Buchstabe a den Bezugszeichen des Ausführungsbeispiels in den Figuren 1 bis 15 nachgestellt. In den erfindungsgemäßen Ausführungsbeispielen der Figuren 16 und 17 ist der Buchstabe a durch die Buchstaben b und c ersetzt. In den nicht erfindungsgemäßen Ausführungen der Figuren 18 bis 21 ist der Buchstabe a durch die Buchstaben d bis g ersetzt.

Fig. 16 zeigt einen senkrecht zu einer Erstreckungsrichtung 72b eines Drahts 12b einer Drahtnetzvorrichtung gebildeten Querschnitt 22b des Drahts 12b. Der Draht 12b weist einen Drahtkern 76b auf. Der Draht 12b weist einen Korrosionsschutz 14b auf. Der Draht 12b weist eine Beschichtung 30b auf. Der Korrosionsschutz 14b ist als eine Beschichtung 30b ausgebildet. Die Beschichtung 30b ist als eine Korrosionsschutzschicht 16b ausgebildet. Der Draht 12b ist abgesehen von der Beschichtung 30b aus einem hochfesten Stahl 74b ausgebildet. Der Drahtkern 76b ist aus einem hochfesten Stahl 74b ausgebildet. Die Korrosionsschutzschicht 16b umschließt den Drahtkern 76b in Umfangsrichtung vollständig. Die Korrosionsschutzschicht 16b weist eine konstante Schichtdicke 84b auf. Die Korrosionsschutzschicht 16b ist als eine Zink-Aluminiumbeschichtung 28b ausgebildet. Die Zink-Aluminiumbeschichtung 28b weist einen Aluminiumanteil von etwa 5 % auf. Die Korrosionsschutzschicht 16b ist stoffschlüssig mit dem Drahtkern 76b verbunden.

Fig. 17 zeigt einen senkrecht zu einer Erstreckungsrichtung 72c eines Drahts 12c einer Drahtnetzvorrichtung gebildeten Querschnitt 22c des Drahts 12c. Der Draht 12c weist einen Drahtkern 76c auf. Der Draht 12c weist einen Korrosionsschutz 14c auf. Der Draht 12c weist eine Beschichtung 30c auf. Der Korrosionsschutz 14c ist als eine Beschichtung 30c ausgebildet. Die Beschichtung 30c ist als eine Korrosionsschutzschicht 16c ausgebildet. Der Draht 12c ist abgesehen von der Beschichtung 30c aus einem hochfesten Stahl 74c ausgebildet. Der Drahtkern 76c ist aus einem hochfesten Stahl 74c ausgebildet. Die Korrosionsschutzschicht 16c umschließt den Drahtkern 76c in Umfangsrichtung vollständig. Die Korrosionsschutzschicht 16c weist eine konstante Schichtdicke 84c auf. Die Korrosionsschutzschicht 16c ist als eine Zink-Aluminiumbeschichtung 28c ausgebildet. Die Zink-Aluminiumbeschichtung 28c weist einen Aluminiumanteil von etwa 5 % auf. Die Zink-Aluminiumbeschichtung 28c weist zumindest ein von Aluminium und/oder von Zink verschiedenes Additiv auf. Das Additiv ist als Magnesium ausgebildet. Das Additiv umfasst zumindest 0,5 % der Korrosionsschutzschicht 16c. Die Korrosionsschutzschicht 16c ist stoffschlüssig mit dem Drahtkern 76c verbunden.

Fig. 18 zeigt einen senkrecht zu einer Erstreckungsrichtung 72d eines Drahts 12d einer nicht erfindungsgemäßen Drahtnetzvorrichtung gebildeten Querschnitt 22d des Drahts 12d. Der Draht 12d weist einen Drahtkern 76d auf. Der Draht 12d weist einen Korrosionsschutz 14d auf. Der Korrosionsschutz 14d ist einteilig mit dem Draht 12d ausgebildet. Der Draht 12d ist aus einem hochfesten Stahl 74d ausgebildet. Der Korrosionsschutz 14d ist aus einem hochfesten Stahl 74d ausgebildet. Der Draht 12d ist aus einem rostfreien Stahl 218d und/oder einem rostträgen Stahl 220d ausgebildet. Der Korrosionsschutz 14d ist aus einem rostfreien Stahl 218d und/oder einem rostträgen Stahl 220d ausgebildet. Der Drahtkern 76d ist aus einem hochfesten Stahl 74d ausgebildet.

Fig. 19 zeigt einen senkrecht zu einer Erstreckungsrichtung 72e eines Drahts 12e einer nicht erfindungsgemäßen Drahtnetzvorrichtung gebildeten Querschnitt 22e des Drahts 12e. Der Draht 12e weist einen Drahtkern 76e auf. Der Draht 12e weist einen Korrosionsschutz 14e auf. Der Draht 12e weist eine Beschichtung 30e auf. Der Korrosionsschutz 14e ist als eine Beschichtung 30e ausgebildet. Die Beschichtung 30e ist als eine Korrosionsschutzschicht 16e ausgebildet. Der Draht 12e ist abgesehen von der Beschichtung 30e aus einem hochfesten Stahl 74e ausgebildet. Der Drahtkern 76e ist aus einem hochfesten Stahl 74e ausgebildet. Die Korrosionsschutzschicht 16e umschließt den Drahtkern 76e in Umfangsrichtung vollständig. Die Korrosionsschutzschicht 16e weist eine konstante Schichtdicke 84e auf. Die Korrosionsschutzschicht 16e ist zu einem Großteil aus einer zumindest teilweise organischen und/oder zumindest teilweise anorganischen Kohlenstoff-Verbindung ausgebildet. Die Korrosionsschutzschicht 16e ist zumindest teilweise als eine Plastikbeschichtung 222e ausgebildet. Die Korrosionsschutzschicht 16e ist zumindest teilweise aus einer Graphenbeschichtung 224e ausgebildet. Die Korrosionsschutzschicht 16e ist stoffschlüssig mit dem Drahtkern 76e verbunden.

Fig. 20 zeigt einen senkrecht zu einer Erstreckungsrichtung 72f eines Drahts 12f einer nicht erfindungsgemäßen Drahtnetzvorrichtung gebildeten Querschnitt 22f des Drahts 12f. Der Draht 12f weist einen Drahtkern 76f auf. Der Draht 12f weist einen Korrosionsschutz 14f auf. Der Draht 12f weist eine Mehrzahl an Beschichtungen 30f, 226f auf. Der Draht 12f umfasst eine zwei Beschichtungen 30f, 226f, wobei eine Beschichtung 30f als eine innere Beschichtung 228f und eine andere Beschichtung 226f als eine äußere Beschichtung 230f ausgebildet ist. Die innere Beschichtung 228f und die äußere Beschichtung 230f sind aus voneinander zumindest wesentlich verschiedenen Beschichtungsmaterialien ausgebildet. Die äußere Beschichtung 230f umschließt die innere Beschichtung 228f zumindest in Umfangsrichtung vollständig. Der Korrosionsschutz 14f ist als eine Mehrzahl an Beschichtungen 30f, 226f ausgebildet. Die Beschichtungen 30f, 226f sind als zwei Korrosionsschutzschichten 16f ausgebildet. Der Draht 12f ist abgesehen von den Beschichtungen 30f, 226f aus einem hochfesten Stahl 74f ausgebildet. Der Drahtkern 76f ist aus einem hochfesten Stahl 74f ausgebildet. Die Korrosionsschutzschichten 16f umschließen den Drahtkern 76f in Umfangsrichtung vollständig. Die Korrosionsschutzschichten 16f weisen konstante Schichtdicken 84f, 232f auf. Die Korrosionsschutzschichten 16f können unterschiedliche und/oder identische Schichtdicken 84f, 232f aufweisen. Die innere Beschichtung 228f ist stoffschlüssig mit dem Drahtkern 76e verbunden. Die äußere Beschichtung 230f ist stoffschlüssig mit der inneren Beschichtung 228f verbunden.

Fig. 21 zeigt ein nicht erfindungsgemäßes Drahtnetz 44g. Das Drahtnetz 44g ist als ein Sicherheitsnetz zu einer Sicherung gegen Steinschlag ausgebildet. Das Drahtnetz 44g weist eine Drahtnetzvorrichtung auf. Die Drahtnetzvorrichtung weist eine die Zahl zwei übersteigende Mehrzahl ineinandergreifender Netzelemente 10g auf. Die Netzelemente 10g sind aus einem hochfesten Stahl 74g ausgebildet. Die Netzelemente 10g sind ringförmig in sich geschlossen ausgebildet. Das Drahtnetz 44g ist als ein Ringnetz 212g ausgebildet. Die Netzelemente 10g sind als Ringelemente 234g des Ringnetzes 212g ausgebildet.

## Patentansprüche

1. Verfahren zur Herstellung eines Drahtnetzes (44a-c; 44e), bei welchem das Drahtnetz (44a-c; 44e) aus Drahtnetzvorrichtungen mit zumindest zwei ineinandergreifenden Netzelemeneten (10a-c; 10e) hergesstelt wird, wobei die Netzelemente (10a-c; 10e) aus zumindest einem Einzeldraht, einem Drahtbündel, einer Drahtitze, einem Drahtseil und/oder einem andered Längselement mit zumindest einem, abgesehen von einer Beschichtung vollständig aus einem hochfesten Stahl (74a-c; 74e) mit einer Zugfestigkeit von wenigstens 800 N mm⁻² ausgebildeten Draht (12a-c; 12e) gefertigt sind,
wobei der Draht (12a-c; 12e) zumindest eine Korrosionsschutzschicht (16a-c; 16e) aufweist, wobei das Netzelement (10a-c; 10e) eine Form einer flachgedrückten Helix mit einer Abfolge von alternierenden Schenkeln (62a-c, 64a-c; 62e, 64e) und Biegestellen (66a-c; 66e) aufweist,
wobei die Biegestellen (66a-c; 66e) jeweils zwei Schenkel (62a-c, 64a-c; 62e, 64e) verbinden und die Schenkel (62a-c, 64a-c; 62e, 64e) an der Biegestelle (66a-c; 66e) einen Biegewinkel (70a-c; 70e) aufspannen, wobei in zumindest einem Verfahrensschritt (186a-c; 186e) der Draht (12a-c; 12e) aus dem hochfesten Stahl (74a-c; 74e) zu den Wendeln (58a-c; 58e) gebogen wird,
wobei die Biegestelle (66a-c; 66f) eine Stelle des Drahts (12a-c; 12f) ist, an der sich eine Drahtausrichtung innerhalb einer Länge des Drahts (12a-c; 12f), welcher kleiner ist als fünf Drahtdurchmesser, um zumindest 60° ändert, und
wobei in zumindest einem Verfahrensschritt (192a-c; 192e) aus den Wendeln (58a-c; 58e) das Drahtnetz (44a-c; 44e) geflochten wird,
**dadurch gekennzeichnet, dass**
die Korrosionsschutzschicht (16a-c; 16e) den in der DIN EN 10264-2:2012-03 Norm an eine Mindestmenge eines Überzugs mit einer Korrosionsschutzschicht (16a-c; 16e) für Klasse A Drähte (12a-c; 12e) gestellten Anforderungen genügt,
dass eine Eignung eines Drahtes (12a-c; 12e) zur Herstellung eines Drahtnetzes (44a-c; 44e) vor einer Produktion des fertigen Drahtnetzes (44a-c; 44e) festgestellt wird, indem in zumindest einem Verfahrensschritt (178a-c; 178e) ein geeigneter Draht (12a-c; 12e) für das Drahtnetz (44a-c; 44e) mit hoher Korrosionsbeständigkeit mittels einer Klimawechselprüfung an einem Teilstück eines aus dem Draht (12a-c; 12e) mit der Korrosionsschutzschicht (16a-c; 16e) bestehenden Drahtgeflechts (18a-c; 18e) mit zumindest zwei Biegestellen (66a-c; 66e) und mit zumindest zwei ineinandergeflochtenen Netzelementen (10a-c; 10e) derart bestimmt wird, dass das Teilstück des Drahtgeflechts (18a-c; 18e) in der Klimawechselprüfung eine Korrosionsbeständigkeit von mehr als 1680 Stunden, vorzugsweise mehr als 2016 Stunden, vorteilhaft mehr als 2520 Stunden, bevorzugt mehr als 3024 Stunden und besonders bevorzugt mehr als 3528 Stunden, aufweist, wobei die Klimawechselprüfung eine Korrosionsbeständigkeitsprüfung der Korrosionsschutzschicht (16a-c; 16e) nach den Vorgaben der VDA (Verein der Automobilindustrie)-Empfehlung VDA 233-102 ist und wobei ein Draht (12a-c; 12e), welcher in dieser Klimawechselprüfung eine ausreichende Korrosionsbeständigkeit gezeigt hat, für den Herstellungsprozess ausgewählt wird
und **dadurch gekennzeichnet, dass** der Draht (12a-c; 12e) zur Bildung des Netzelements (10a-c; 10ef) mit einem Biegeradius (46a-c; 46e) gebogen wird, welcher in jedem Arbeitsschritt größer als 5 mm ist und/oder dass der Draht (12a-c; 12e) zur Bildung des Netzelements (10a-c; 10e) mit einer Biegegeschwindigkeit unterhalb 360 Grad/s gebogen wird und dass bei einer Beschichtung des Drahts (12a-c; 12e) mit einer Korrosionsschutzschicht (16a-c; 16e) eine Beschichtungstemperatur in jedem Arbeitsschritt unterhalb 440 °C verbleibt.

2. Verfahren nach Anspruch 14, **dadurch gekennzeichnet, dass** eine bei der Beschichtung des Drahts (12a-c; 12e) auf den Draht (12a-c; 12e) wirkende Wärme für eine Festigkeitserhöhung, insbesondere Zugfestigkeitserhöhung, des Drahts (12a-c; 12e) verwendet wird.

3. Drahtgeflecht (18a-c; 18e) erhältlich durch das Verfahren zur Herstellung eines Drahtnetzes (44a-c; 44e) nach Anspruch 41, mit einer Mehrzahl an ineinandergreifenden Netzelementen (10a-c; 10e), welche aus zumindest einem Einzeldraht, einem Drahtbündel, einer Drahtlitze, einem Drahtseil und/oder einem anderen Längselement mit zumindest einem, abgesehen von einer Beschichtung, vollständig aus einem hochfesten Stahl (74a-c; 74e) mit einer Zugfestigkeit von wenigstens 800 N mm⁻² ausgebildeten Draht (12a-c; 12e) gefertigt sind,
wobei der Draht (12a-c; 12e) zumindest eine Korrosionsschutzschicht (16a-c; 16e) aufweist, wobei das Netzelement (10a-c; 10e) eine Form einer flachgedrückten Helix mit einer Abfolge von alternierenden Schenkeln (62a-c, 64a-c; 62e, 64e) und Biegestellen (66a-c; 66e) aufweist,
wobei die Biegestellen (66a-c; 66e) jeweils zwei Schenkel (62a-c, 64a-c; 62e, 64e) verbinden und die Schenkel (62a-c, 64a-c; 62e, 64e) an der Biegestelle (66a-c; 66e) einen Biegewinkel (70a-c; 70e) aufspannen, wobei die Biegestelle (66a-c; 66f) eine Stelle des Drahts (12a-c; 12f) ist, an der sich eine Drahtausrichtung innerhalb einer Länge des Drahts (12a-c; 12f), welcher kleiner ist als fünf Drahtdurchmesser, um zumindest 60° ändert,
wobei zumindest ein Teilstück eines aus dem Draht (12a-c; 12e) bestehenden Drahtgeflechts (18a-c; 18e) mit der Korrosionsschutzschicht (16a-c; 16e) und mit zumindest zwei Biegestellen (66a-c; 66e) und mit zumindest zwei ineinandergeflochtenen Netzelementen (10a-c; 10e), in einer Klimawechselprüfung eine Korrosionsbeständigkeit von mehr als 1680 Stunden, vorzugsweise mehr als 2016 Stunden, vorteilhaft mehr als 2520 Stunden, bevorzugt mehr als 3024 Stunden und besonders bevorzugt mehr als 3528 Stunden aufweist, wobei die Klimawechselprüfung eine Korrosionsbeständigkeitsprüfung der Korrosionsschutzschicht (16a-c; 16e) nach den Vorgaben der VDA (Verein der Automobilindustrie)-Empfehlung VDA 233-102 ist,
wobei die Korrosionsschutzschicht (16a-c; 16e) den in der DIN EN 10264-2:2012-03 Norm an eine Mindestmenge eines Überzugs mit einer Korrosionsschutzschicht (16a-c; 16e) für Klasse A Drähte (12a-c; 12e) gestellten Anforderungen genügt.

## Claims

1. Method for a production of a wire net (44a-c; 44e), in which the wire net (44a-c; 44e) is produced from wire netting devices with at least two mutually engaging net elements (10a-c; 10e),
wherein the net elements (10a-c; 10e) are produced from at least one single wire, a wire bundle, a wire strand, a wire rope and/or another longitudinal element with at least one wire (12a-c; 12e) that, apart from a coating, is made completely of a high-tensile steel (74a-c; 74e) having a tensile strength of at least 800 N mm⁻² ,
wherein the wire (12a-c; 12e) comprises at least one corrosion protection layer (16a-c; 16e), wherein the net element (10a-c; 10e) has a shape of a flat-pressed helix with a sequence of alternating legs (62a-c, 64a-c; 62e, 64e) and bending regions (66a-c; 66e),
wherein the bending regions (66a-c; 66e) each connect two legs (62a-c, 64a-c; 62e, 64e) and the legs (62a-c, 64a-c; 62e, 64e) span a bending angle (70a-c; 70e) in the bending region (66a-c; 66e),
wherein in at least one method step (186a-c; 186e) the wire (12a-c; 12e) that is made of the high-tensile steel (74a-c; 74e) is bent to form the helices (58a-c; 58e),
wherein the bending region (66a-c; 66f) is a region of the wire (12a-c; 12f) in which a wire orientation changes by at least 60° within a length of the wire (12a-c; 12f) that is smaller than five wire diameters, and
wherein in at least one method step (192a-c; 192e) the wire net (44a-c; 44e) is braided from the helices (58a-c; 58e),
**characterized in that**
the corrosion protection layer (16a-c; 16e) fulfils the requirements, given in the standard DIN EN 10264-2:2012-03 for a minimum quantity of a coating with a corrosion protection layer (16a-c; 16e) for Class A wires (12a-c; 12e), **in that** a suitability of a wire (12a-c; 12e) for manufacturing a wire net (44a-c; 44e) is determined prior to production of the finished wire net (44a-c; 44e) by identifying, in at least one method step (178a-c; 178e), a suitable wire (12a-c; 12e) for the wire net (44a-c; 44e) with a high corrosion resistance by means of an alternating climate test on a portion of a wire mesh (18a-c; 18e), which is implemented of the wire (12a-c; 12e) with the corrosion protection layer (16a-c; 16e) and with at least two bending regions (66a-c; 66e) and at least two mutually braided net elements (10a-c; 10e), in such a way that the portion of the wire mesh (18a-c; 18e) in the alternating climate test has a corrosion resistance of more than 1,680 hours, preferably more than 2,016 hours, advantageously more than 2,520 hours, preferentially more than 3,024 hours and particularly preferably more than 3,528 hours, wherein the alternating climate test is a corrosion resistance test of the corrosion protection layer (16a-c; 16e) following the specifications of VDA (German Association of the Automotive Industry) given in their recommendation VDA 233-102,
and wherein a wire (12a-c; 12e) that has shown a sufficient corrosion resistance in this alternating climate test is chosen for the manufacturing process,
and **characterized in that** the wire (12a-c; 12e) for forming the net element (10a-c; 10e) is bent with a bending radius (46a-c; 46e) that is in each work step greater than 5 mm, and/or **in that** the wire (12a-c; 12e) for forming the net element (10a-c; 10e) is bent with a bending speed that is less than 360 degrees/sec, and **in that**, during a coating of the wire (12a-c; 12e) with a corrosion protection layer (16a-c; 16e), a coating temperature remains in each work step below 440°C.

2. Method according to claim 1,
**characterized in that** a heat acting on the wire (12a-c; 12e) during the coating of the wire (12a-c; 12e) is used for augmenting a strength, in particular augmenting a tensile strength, of the wire (12a-c; 12e).

3. Wire mesh (18a-c; 18e) obtainable by the method for a production of a wire net (44a-c; 44e) according to claim 1, with a plurality of mutually engaging net elements (10a-c; 10e) that are produced from at least one single wire, a wire bundle, a wire strand, a wire rope and/or another longitudinal element with at least one wire (12a-c; 12e) that, apart from a coating, is made completely of a high-tensile steel (74a-c; 74e) having a tensile strength of at least 800 N mm⁻² ,
wherein the wire (12a-c; 12e) comprises at least one corrosion protection layer (16a-c; 16e), wherein the net element (10a-c; 10e) has a shape of a flat-pressed helix with a sequence of alternating legs (62a-c, 64a-c; 62e, 64e) and bending regions (66a-c; 66e),
wherein the bending regions (66a-c; 66e) each connect two legs (62a-c, 64a-c; 62e, 64e) and the legs (62a-c, 64a-c; 62e, 64e) span a bending angle (70a-c; 70e) in the bending region (66a-c; 66e),
wherein the bending region (66a-c; 66f) is a region of the wire (12a-c; 12f) in which a wire orientation changes by at least 60° within a length of the wire (12a-c; 12f) that is smaller than five wire diameters,
wherein at least a portion of a wire mesh (18a-c; 18e) which is implemented of the wire (12a-c; 12e), with the corrosion protection layer (16a-c; 16e) and with at least two bending regions (66a-c; 66e) and at least two mutually braided net elements (10a-c; 10e), in an alternating climate test has a corrosion resistance of more than 1,680 hours, preferably more than 2,016 hours, advantageously more than 2,520 hours, preferentially more than 3,024 hours and particularly preferably more than 3,528 hours,
wherein the alternating climate test is a corrosion resistance test of the corrosion protection layer (16a-c; 16e) following the specifications of VDA (German Association of the Automotive Industry) given in their recommendation VDA 233-102,
wherein the corrosion protection layer (16a-c; 16e) fulfils the requirements given for Class A wires (12a-c; 12e) in the standard DIN EN 10264-2:2012-03 for a minimum quantity of a coating with a corrosion protection layer (16a-c; 16e).

## Revendications

1. Procédé de fabrication d'un treillis métallique (44a-c ; 44e), dans lequel le treillis métallique (44a-c ; 44e) est fabriqué à partir de dispositifs de treillis métallique avec au moins deux éléments de treillis (10a-c ; 10e) s'engageant l'un dans l'autre,
où les éléments de treillis (10a-c ; 10e) sont fabriqués d'au moins un fil métallique individuel, d'un faisceau de fils métalliques, d'un toron métallique, d'un câble métallique et/ou d'un autre élément longitudinal comprenant au moins un fil (12a-c ; 12e) réalisé, à l'exception d'un revêtement, entièrement d'un acier à haute résistance (74a-c ; 74e) avec une résistance à la traction d'au moins 800 N mm⁻²,
où le fil métallique (12a-c ; 12e) présente au moins une couche de protection anti-corrosion (16a-c ; 16e),
l'élément de treillis (10a-c ; 10e) présentant une forme d'une hélice aplatie avec une succession de branches (62a-c, 64a-c ; 62e, 64e) et de zones de pliage (66a-c ; 66e) en alternance,
où les zones de pliage (66a-c ; 66e) relient respectivement deux branches (62a-c, 64a-c ; 62e, 64e) et les branches (62a-c, 64a-c ; 62e, 64e) forment un angle de pliage (70a-c ; 70e) dans la zone de pliage (66a-c ; 66e),
où dans au moins une étape de procédé (186a-c ; 186e) le fil métallique (12a-c ; 12e) réalisé de l'acier à haute résistance (74a-c ; 74e) est plié pour former les hélices (58a-c ; 58e),
où la zone de pliage (66a-c ; 66f) est une zone du fil métallique (12a-c ; 12f) dans laquelle une orientation du fil métallique varie par au moins 60° dans une longueur du fil métallique (12a-c ; 12f) inférieure à cinq diamètres de fil métallique, et
où dans au moins une étape de procédé (192a-c ; 192e) le treillis métallique (44a-c ; 44e) est tressé à partir des hélices (58a-c ; 58e),
**caractérisé en ce que**
la couche de protection anti-corrosion (16a-c ; 16e) satisfait aux exigences posées dans la norme DIN EN 10264-2:2012-03 pour une quantité minimale d'un revêtement avec une couche de protection anti-corrosion (16a-c ; 16e),
qu'une aptitude d'un fil métallique (12a-c ; 12e) à la fabrication d'un treillis métallique (44a-c ; 44e) est déterminée avant une production du treillis métallique fini (44a-c ; 44e) **en ce que** dans au moins une étape de procédé (178a-c ; 178e) un fil métallique (12a-c ; 12e) approprié pour le treillis métallique (44a-c ; 44e) avec une résistance à la corrosion élevée est identifié par le biais d'un test au climat alternant d'une partie d'un treillis métallique (18a-c ; 18e), constituée du fil métallique (12a-c ; 12e) ayant la couche de protection anti-corrosion (16a-c ; 16e), ayant au moins deux zones de pliage (66a-c ; 66e) et au moins deux éléments de treillis (10a-c ; 10e) tressés l'un dans l'autre, de telle manière que la partie du treillis métallique (18a-c ; 18e) présente dans le test au climat alternant une résistance à la corrosion de plus de 1680 heures, de préférence de plus de 2016 heures, avantageusement de plus de 2520 heures, préférablement de plus de 3024 heures et de manière particulièrement préférée de plus de 3528 heures,
où le test au climat alternant est un test de résistance à la corrosion de la couche de protection anti-corrosion (16a-c ; 16e) selon les spécifications de la recommandation VDA 233-102 pourvue par VDA (Association de l'industrie automobile),
et où un fil métallique (12a-c ; 12e) qui a montré une résistance à la corrosion suffisante dans ce test au climat alternant est sélectionné pour le processus de fabrication,
et **caractérisé en ce que** le fil métallique (12a-c ; 12e) est plié pour former l'élément de treillis (10a-c ; 10e) avec un rayon de courbure (46a-c ; 46e) qui est dans chaque étape de travail supérieur à 5 mm et/ou **en ce que** le fil métallique (12a-c ; 12e) est plié pour former l'élément de treillis (10a-c ; 10e) avec une vitesse de courbure inférieure à 360 degrés/sec et **en ce que** lors d'un revêtement du fil métallique (12a-c ; 12e) avec une couche de protection anti-corrosion (16a-c ; 16e) une température de revêtement reste dans chaque étape de travail inférieure à 440°C .

2. Procédé selon la revendication 1,
**caractérisé en ce qu'**une chaleur agissant sur le fil métallique (12a-c ; 12e) lors du revêtement du fil métallique (12a-c ; 12e) est utilisée pour une augmentation de la résistance, en particulier une augmentation de la résistance à la traction, du fil métallique (12a-c ; 12e).

3. Treillis métallique (18a-c ; 18e) qui peut être obtenu par le procédé de fabrication d'un treillis métallique (44a-c ; 44e) selon la revendication 1, avec une pluralité d'éléments de treillis (10a-c ; 10e) s'engageant l'un dans l'autre, qui sont fabriqués d'au moins un fil métallique individuel, d'un faisceau de fils métalliques, d'un toron métallique, d'un câble métallique et/ou d'un autre élément longitudinal comprenant au moins un fil métallique (12a-c ; 12e) réalisé, à l'exception d'un revêtement, entièrement d'un acier à haute résistance (74a-c ; 74e) avec une résistance à la traction d'au moins 800 N mm⁻²,
où le fil métallique (12a-c ; 12e) présente au moins une couche de protection anti-corrosion (16a-c ; 16e), l'élément de treillis (10a-c ; 10e) présentant une forme d'une hélice aplatie avec une succession de branches (62a-c, 64a-c ; 62e, 64e) et de zones de pliage (66a-c ; 66e) en alternance, où les zones de pliage (66a-c ; 66e) relient respectivement deux branches (62a-c, 64a-c ; 62e, 64e) et les branches (62a-c, 64a-c ; 62e, 64e) forment un angle de pliage (70a-c ; 70e) dans la zone de pliage (66a-c ; 66e), où la zone de pliage (66a-c ; 66f) est une zone du fil métallique (12a-c ; 12f) dans laquelle une orientation du fil métallique varie par au moins 60° dans une longueur du fil métallique (12a-c ; 12f) inférieure à cinq diamètres de fil métallique,
où au moins une partie d'un treillis métallique (18a-c ; 18e) constituée du fil métallique (12a-c ; 12e), ayant la couche de protection anti-corrosion (16a-c ; 16e), ayant au moins deux zones de pliage (66a-c ; 66e) et au moins deux éléments de treillis (10a-c ; 10e) tressés l'un dans l'autre, présente dans un test au climat alternant une résistance à la corrosion de plus de 1680 heures, de préférence de plus de 2016 heures, avantageusement de plus de 2520 heures, préférablement de plus de 3024 heures et de préférence particulière de plus de 3528 heures,
où le test au climat alternant est un test de résistance à la corrosion de la couche de protection anti-corrosion (16a-c ; 16e) selon les spécifications de la recommandation VDA 233-102 pourvue par VDA (Association de l'industrie automobile),
où la couche de protection anti-corrosion (16a-c ; 16e) satisfait aux exigences posées dans la norme DIN EN 10264-2:2012-03 pour une quantité minimale d'un revêtement avec une couche de protection anti-corrosion (16a-c ; 16e) pour des fils métalliques classe A (12a-c ; 12e).
